# EUROPEAN PATENT APPLICATION

(11) **EP 4 592 366 A1**
(43) Date of publication of application: **30.07.2025**
(21) Application number: 25150751.3
(22) Date of filing: 08.01.2025
(51) Int. Cl.: C09D 11/107, B41M 5/00, C09D 11/322, C09D 11/36, C09D 11/54

(54) **INKJET INK AND INK SET**

(30) Priority: 24.01.2024 JP 2024008560; 27.08.2024 JP 2024145685
(71) Applicant: RISO KAGAKU CORPORATION, Tokyo 108-8385 (JP)
(72) Inventor: NAKAO, Sayako, Tokyo, 108-8385 (JP); OKAWA, Teruaki, Tokyo, 108-8385 (JP); WATANABE, Yoshifumi, Tokyo, 108-8385 (JP); SUGAWARA, Noriaki, Tokyo, 108-8385 (JP); KOYAMA, Takeshi, Tokyo, 108-8385 (JP)
(74) Representative: Schön, Christoph

(57) **Abstract**

Provided is an inkjet ink including: a colorant; a binder resin; water; and an organic solvent S, in which the amount of the water is in a range from 3.0% by mass to 10.0% by mass, relative to the total amount of the ink, and the organic solvent S includes an organic solvent A with a boiling point of 150°C or higher and lower than 200°C, in an amount of 90.0% by mass or more, relative to the total amount of the organic solvent S. An ink set is also provided.

## Description

### TECHNICAL FIELD

Embodiments of the present invention relate to an inkjet ink and an ink set.

### BACKGROUND

In an inkjet recording method, an inkjet ink with high fluidity is jetted from a fine nozzle in the form of ink droplets to record an image on a substrate positioned facing the nozzle. The inkjet recording method has rapidly become widespread in recent years, because the method enables high-speed printing to be performed with little noise. Examples of inks that can be used in this type of inkjet recording method include an aqueous ink which contains water as a main solvent, an ultraviolet-curable ink (UV ink) which contains a large amount of a polymerizable monomer as a main component, a hot melt ink (solid ink) which contains a large amount of a wax as a main component, and what is referred to as a non-aqueous ink which contains a non-aqueous solvent as a main solvent. The non-aqueous ink can be classified into a solvent ink (solvent-based ink) in which a main solvent is a volatile organic solvent, and an oil-based ink in which a main solvent is an organic solvent having either low volatility or no volatility. The solvent ink dries on a substrate mainly by evaporation of the organic solvent, while the oil-based ink dries mainly by penetration of the ink into a substrate.

Inkjet printing is sometimes performed on a plastic substrate such as a vinyl chloride resin or an olefin resin. Conventionally, when printing is performed on a substrate which is difficult for an ink to penetrate, a highly volatile organic solvent is often used for an ink so as not to cause image bleeding. In addition, since heat resistance of a plastic substrate such as a vinyl chloride resin or an olefin resin is generally not so high, it is desirable to dry an ink quickly at a low temperature.

However, if an organic solvent with a low boiling point and high volatility is used for a solvent ink, for example, nozzle clogging at an inkjet head or an ink sticking in the vicinity of a nozzle may easily cause jetting failure. Further, from the viewpoint of a work environment at the time of printing, when an ink containing an organic solvent is used, it is preferable to use an organic solvent with volatility which is not so high and with high safety.

JP 2012-233086 A discloses an ink for inkjet recording containing diethylene glycol ethyl methyl ether, and at least either diethylene glycol monomethyl ether or diethylene glycol monoethyl ether.

JP 2017-190373 A discloses a non-aqueous inkjet ink composition containing (poly)ethylene glycol dialkyl ether; and (poly)alkylene glycol monoalkyl ether monoacetate and/or (poly)alkylene glycol diacetate.

### SUMMARY

An object of one or more embodiments of the present invention is to provide an inkjet ink which enables formation of an image with little bleeding and has excellent jetting properties.

One or more embodiments of the present invention provide an inkjet ink including: a colorant; a binder resin; water; and an organic solvent S, in which the amount of the water is in a range from 3.0% by mass to 10.0% by mass, relative to the total amount of the ink, and the organic solvent S includes an organic solvent A with a boiling point of 150°C or higher and lower than 200°C, in an amount of 90.0% by mass or more, relative to the total amount of the organic solvent S.

One embodiment of the present invention provides an inkjet ink including: a colorant; a binder resin; water; and an organic solvent S, in which the amount of the water is in a range from 3.0% by mass to 10.0% by mass, relative to the total amount of the ink, the organic solvent S includes an organic solvent A with a boiling point of 150°C or higher and lower than 200°C, in an amount of 90.0% by mass or more, relative to the total amount of the organic solvent S, and the organic solvent A includes a water-soluble organic solvent B with a boiling point of 150°C or higher and lower than 200°C, in an amount of 50.0% by mass or more, relative to the total amount of the organic solvent S.

Another embodiment of the present invention provides an inkjet ink including: a colorant; a binder resin; water; and an organic solvent S, in which the amount of the water is in a range from 3.0% by mass to 10.0% by mass, relative to the total amount of the ink, the organic solvent S includes an organic solvent A with a boiling point of 150°C or higher and lower than 200°C, in an amount of 90.0% by mass or more, relative to the total amount of the organic solvent S, and assuming that the amount of the water, relative to the total amount of the ink, is W% by mass, that a viscosity a (mPa·s) is a viscosity at 23°C of a mixture Ma of the organic solvent S and water in which a mass ratio between the organic solvent S and the water (organic solvent S : water) is 99:1, and that a viscosity b (mPa·s) is a viscosity at 23°C of a mixture Mb of the organic solvent S and water in which a mass ratio between the organic solvent S and the water (organic solvent S : water) is 100 - W : W, then a ratio a/b between the viscosity a and the viscosity b is 0.95 or less.

Another embodiment of the present invention provides an inkjet ink set including: the inkjet ink of any of the above embodiments; and a pretreatment liquid including an aggregating agent, and water in an amount of more than 10.0% by mass, relative to the total amount of the pretreatment liquid.

According to one or more embodiments of the present invention, it is possible to provide an inkjet ink which has excellent jetting properties, and which enables formation of an image with little bleeding.

### DETAILED DESCRIPTION OF EMBODIMENTS

The present invention will be described below using embodiments. Those illustrated in the following embodiments do not limit the present invention. In the following description, an inkjet ink may be referred to simply as an "ink".

### <Inkjet ink>

In one or more embodiments of the present invention, an inkjet ink containing a colorant, a binder resin, water, and an organic solvent S is provided, in which the amount of the water, relative to the total amount of the ink, is in a range from 3.0% by mass to 10.0% by mass, and the organic solvent S contains an organic solvent A with a boiling point of 150°C or higher and lower than 200°C, in an amount of 90.0% by mass or more, relative to the total amount of the organic solvent S. In one or more embodiments, the inkjet ink satisfies at least one selected from the group consisting of (i) and (ii) below.
(i) The organic solvent A contains a water-soluble organic solvent B with a boiling point of 150°C or higher and lower than 200°C, in an amount of 50.0% by mass or more, relative to the total amount of the organic solvent S.
(ii) Assuming that the amount of the water, relative to the total amount of the ink, is W% by mass, that a viscosity a (mPa·s) is a viscosity at 23°C of a mixture Ma of the organic solvent S and water in which a mass ratio between the organic solvent S and the water (organic solvent S : water) is 99:1, and that a viscosity b (mPa·s) is a viscosity at 23°C of a mixture Mb of the organic solvent S and water in which a mass ratio between the organic solvent S and the water (organic solvent S : water) is 100 - W : W, then a ratio a/b between the viscosity a and the viscosity b is 0.95 or less.

An inkjet ink according to an embodiment contains a colorant, a binder resin, water, and an organic solvent S, in which the amount of the water, relative to the total amount of the ink, is in a range from 3.0% by mass to 10.0% by mass, the organic solvent S contains an organic solvent A with a boiling point of 150°C or higher and lower than 200°C, in an amount of 90.0% by mass or more, relative to the total amount of the organic solvent S, and the organic solvent A contains a water-soluble organic solvent B with a boiling point of 150°C or higher and lower than 200°C, in an amount of 50.0% by mass or more, relative to the total amount of the organic solvent S. (Hereinafter, this inkjet ink may be referred to as an "inkjet ink Ia" or an "ink Ia".)

An inkjet ink according to another embodiment contains a colorant, a binder resin, water, and an organic solvent S, in which the amount of the water, relative to the total amount of the ink, is in a range from 3.0% by mass to 10.0% by mass, the organic solvent S contains an organic solvent A with a boiling point of 150°C or higher and lower than 200°C, in an amount of 90.0% by mass or more, relative to the total amount of the organic solvent, and, assuming that the amount of the water, relative to the total amount of the ink, is W% by mass, that a viscosity a (mPa·s) is a viscosity at 23°C of a mixture Ma of the organic solvent S and water in which a mass ratio between the organic solvent S and the water (organic solvent S : water) is 99:1, and that a viscosity b (mPa·s) is a viscosity at 23°C of a mixture Mb of the organic solvent S and water in which a mass ratio between the organic solvent S and the water (organic solvent S : water) is 100 - W : W; then a ratio a/b between the viscosity a and the viscosity b is 0.95 or less (Hereinafter, the inkjet ink may be referred to as an "inkjet ink Ib" or an "ink Ib".)

If an organic solvent with a low boiling point is used to improve drying properties of a solvent ink in order to mitigate the image bleeding, jetting properties of an ink from an inkjet head may deteriorate, for example. The present inventors have found that an image with suppressed bleeding can be formed, while having favorable ink jetting properties, when the ink contains water in an amount of 3.0% by mass to 10.0% by mass, relative to the total amount of the ink; the organic solvent S contains the organic solvent A with a boiling point of 150°C or higher and lower than 200°C, in an amount of 90.0% by mass or more, relative to the total amount of the organic solvent S contained in the ink; and the organic solvent A contains the water-soluble organic solvent B with a boiling point of 150°C or higher and lower than 200°C, in an amount of 50.0% by mass or more, relative to the total amount of the organic solvent S; and/or when, assuming that the amount of the water relative to the total amount of the ink is W% by mass, that a viscosity a (mPa·s) is a viscosity at 23°C of a mixture Ma of the organic solvent S and water in which a mass ratio between the organic solvent S and the water (organic solvent S : water) is 99: 1, and that a viscosity b (mPa·s) is a viscosity at 23°C of a mixture Mb of the organic solvent S and water in which a mass ratio between the organic solvent S and the water (organic solvent S : water) is 100 - W : W, then a ratio a/b between the viscosity a and the viscosity b is 0.95 or less. While not constrained by any specific theory, possible reasons for this are speculated to be as follows.

The drying properties of the ink can be enhanced, due to the ink containing the organic solvent A with a moderate boiling point of 150°C or higher and lower than 200°C, in an amount of 90.0% by mass or more, relative to the total amount of the organic solvent S contained in the ink. In addition, a large amount of organic solvents with low boiling points are not used, and therefore it is possible to reduce the occurrence of jetting failure due to nozzle clogging, or the ink sticking in the vicinity of the nozzle. In addition, the drying properties can be enhanced, due to the ink containing the water in an amount of 3.0% by mass or more, relative to the total amount of the ink. This is considered to be due to an azeotropic phenomenon between the water and the organic solvent. Further, it is possible to suppress an increase in ink viscosity, due to the amount of the water being 10.0% by mass or less, relative to the total amount of the ink. When, as in the ink Ia, the organic solvent A contains the water-soluble organic solvent B with a boiling point of 150°C or higher and lower than 200°C, in an amount of 50.0% by mass or more, relative to the total amount of the organic solvent S, the water can be more stably contained in the ink, and an increase in ink viscosity can be suppressed. When, as in the ink Ib, assuming that the amount of the water, relative to the total amount of the ink, is W% by mass, that the viscosity a (mPa·s) is a viscosity at 23°C of the mixture Ma of the organic solvent S and water in which a mass ratio between the organic solvent S and the water (organic solvent S : water) is 99:1, and that the viscosity b (mPa s) is a viscosity at 23°C of the mixture Mb of the organic solvent S and water in which a mass ratio between the organic solvent S and the water (organic solvent S : water) is 100 - W : W, then a ratio a/b between the viscosity a and the viscosity b is 0.95 or less, it is easy to suppress an increase in ink viscosity, such as when the solid content concentration of the ink increases due to the volatilization of the water with a low boiling point. In this way, with the ink Ia or ink Ib, it is speculated that favorable ink jetting properties can be obtained by suppressing the jetting failure due to nozzle clogging or the ink sticking in the vicinity of the nozzle, and an increase in ink viscosity. Further, it is speculated that the bleeding of an image can be reduced by enhancing the drying properties of the ink.

### <Inkjet ink Ia>

In one embodiment, an inkjet ink Ia containing a colorant, a binder resin, water, and an organic solvent S is provided, in which the amount of the water, relative to the total amount of the ink, is in a range from 3.0% by mass to 10.0% by mass, the organic solvent S contains the organic solvent A with a boiling point of 150°C or higher and lower than 200°C, in an amount of 90.0% by mass or more, relative to the total amount of the organic solvent S, and the organic solvent A contains the water-soluble organic solvent B with a boiling point of 150°C or higher and lower than 200°C, in an amount of 50.0% by mass or more, relative to the total amount of the organic solvent S. The inkjet ink Ia will be described below.

The ink Ia can contain a colorant. The ink Ia can contain a pigment, a dye, or a combination thereof, as the colorant.

Examples of the pigment which can be used include organic pigments such as azo pigments, phthalocyanine pigments, polycyclic pigments, and dye lake pigments, and inorganic pigments such as carbon blacks and metal oxides. Examples of azo pigments include soluble azo lake pigments, insoluble azo pigments, and condensed azo pigments. Examples of phthalocyanine pigments include metal phthalocyanine pigments and metal-free phthalocyanine pigments. Examples of polycyclic pigments include quinacridone-based pigments, perylene-based pigments, perinone-based pigments, isoindoline-based pigments, isoindolinone-based pigments, dioxazine-based pigments, thioindigo-based pigments, anthraquinone-based pigments, quinophthalone-based pigments, metal complex pigments, and diketopyrrolopyrroles (DPP). Examples of carbon blacks include furnace carbon black, lamp black, acetylene black, and channel black. Examples of metal oxides include titanium oxide and zinc oxide. One of these pigments may be used alone, or a combination of two or more of these pigments may be used.

From the viewpoints of jetting stability and storage stability, the average particle size of pigment particles in the ink, expressed as the volume-based average value in a particle size distribution measured by means of a dynamic light scattering method, is preferably 1 µm or less, more preferably 500 nm or less, and even more preferably 300 nm or less.

The pigment may be blended into the ink in the form of a pigment dispersion. The pigment dispersion may be one in which the pigment can be dispersed in a solvent and in which the pigment can assume a dispersed state in the ink. Examples of pigment dispersion that can be used include one in which a pigment is dispersed in a dispersion medium with a pigment dispersant, and one in which a microencapsulated pigment obtained by coating a pigment with a resin is dispersed in a dispersion medium.

A dispersion form of the pigment may be a dispersion in which what is referred to as an encapsulated pigment in which a pigment is coated with an oil-insoluble resin, or colored resin particles are dispersed with a pigment dispersant, but preferably a dispersion in which a pigment dispersant is directly adsorbed on a pigment surface for dispersion.

In terms of the dye, any dye typically used in the technical field may be optionally used. If the dye exhibits an affinity to a non-aqueous solvent of the ink, the storage stability of the ink becomes more favorable, and therefore it is preferable to use an oil-soluble dye.

Examples of the oil-soluble dye include azo dyes, metal complex salt dyes, naphthol dyes, anthraquinone dyes, indigo dyes, carbonium dyes, quinone imine dyes, xanthene dyes, cyanine dyes, quinoline dyes, nitro dyes, nitroso dyes, benzoquinone dyes, naphthoquinone dyes, phthalocyanine dyes, and metal phthalocyanine dyes. One of these dyes may be used alone, or a combination of two or more of these dyes may be used.

From the viewpoint of the print density and the ink viscosity, the amount of the colorant, relative to the total amount of the ink, is preferably in a range from 0.1% by mass to 20% by mass, more preferably in a range from 1% by mass to 15% by mass, and even more preferably in a range from 5% by mass to 10% by mass.

When the ink Ia contains a pigment, a pigment dispersant can be used together with the pigment, in order to stably disperse the pigment in the ink. There are no particular limitations on the pigment dispersant as long as the pigment can be stably dispersed in the ink. Examples of the pigment dispersant which may be preferably used include: a hydroxyl group-containing carboxylate ester, salts of a long-chain polyaminoamide and a high-molecular weight acid ester, a salt of a high-molecular weight polycarboxylic acid, salts of a long-chain polyaminoamide and a polar acid ester, a high-molecular weight unsaturated acid ester, a copolymer of vinyl pyrrolidone and a long-chain alkene, a modified polyurethane, a modified polyacrylate, a polyether ester-type anionic surfactant, a polyoxyethylene alkyl phosphate ester, and a polyester polyamine.

It is preferable to use a polymeric dispersant as the pigment dispersant. As the polymeric dispersant, a synthesized dispersant may be used, or a commercially available product may be used.

Examples of the commercially available product of the pigment dispersant include "Solsperse J180", "Solsperse J200", "Solsperse 71000", "Solsperse 74000", "Solsperse 86000", "Solsperse 87000", "Solsperse M387", and the like manufactured by The Lubrizol Corporation (all product names). One of them may be used alone, or a combination of two or more may be used.

The pigment dispersant is preferably contained in a mass ratio in a range from 0.2 to 1.0, relative to a value of 1 for the pigment. The amount of the pigment dispersant, relative to the total amount of the ink, is preferably in a range from 0.5% by mass to 15% by mass, and more preferably in a range from 1% by mass to 5% by mass.

The ink Ia may contain a binder resin.

From the viewpoint of forming a uniform ink film and enhancing the adhesion of an image to a substrate, the binder resin is preferably a resin that is dissolved in the organic solvent S contained in the ink.

Examples of the binder resin include a (meth)acrylic resin, a styrene-(meth)acrylic resin, a styrene-maleic acid resin, an ethylene-(meth)acrylic resin, a urethane resin, a vinyl chloride resin, a vinyl chloride-vinyl acetate resin, a polyester resin, a polyvinyl alcohol resin, an epoxy resin, and a polyvinylpyrrolidone resin.

From the viewpoint of enhancing the adhesion of an image to a substrate, a (meth)acrylic resin is preferable as the binder resin. A (meth)acrylic resin which can be dissolved in the organic solvent S is more preferable as the binder resin. If a (meth)acrylic resin is used, it is possible to enhance the adhesion of an image to a plastic substrate such as a substrate including an olefin resin. In particular, an olefin resin tends to have a low affinity to an organic solvent in an ink, and it is sometimes difficult to obtain adhesion of an image. However, if a (meth)acrylic resin is used, the adhesion of an image to a substrate can be easily enhanced.

A (meth)acrylic resin may be a resin with at least one unit selected from the group consisting of a unit derived from (meth)acrylic acid, and a unit derived from a (meth)acrylate ester, for example.

In the present disclosure, (meth)acrylic acid collectively means acrylic acid and methacrylic acid. A (meth)acrylate ester collectively means an acrylate ester and a methacrylate ester. (Meth)acrylate collectively means acrylate and methacrylate.

Examples of the (meth)acrylate ester include an alkyl (meth)acrylate ester, benzyl (meth)acrylate, and hydroxyalkyl (meth)acrylate. Examples of the alkyl (meth)acrylate ester include an alkyl (meth)acrylate ester with an alkyl group of 1 to 8 carbon atoms, 1 to 6 carbon atoms, or 1 to 4 carbon atoms. Specific examples thereof include methyl (meth)acrylate, ethyl (meth)acrylate, butyl (meth)acrylate, and 2-ethylhexyl (meth)acrylate.

The (meth)acrylic resin may be a polymer of one or more monomers selected from the group consisting of (meth)acrylic acid and a (meth)acrylate ester, for example.

Examples of the (meth)acrylic resin include poly(meth)acrylic acid, a poly(meth)acrylate ester (for example, poly(methyl (meth)acrylate), poly(ethyl (meth)acrylate), poly(butyl (meth)acrylate), and the like), a (meth)acrylate ester copolymer resin, and a (meth)acrylic acid-(meth)acrylate ester copolymer resin.

It is preferable that the (meth)acrylic resin contains a unit derived from an alkyl (meth)acrylate ester, for example. The amount of the unit derived from an alkyl (meth)acrylate ester may be 50.0% by mass or more, 70.0% by mass or more, or 90.0% by mass or more, relative to the total unit of the (meth)acrylic resin, for example.

Specific examples of the (meth)acrylic resin include a polymer of methyl (meth)acrylate, and a copolymer of methyl (meth)acrylate and at least one selected from the group consisting of (meth)acrylic acid, ethyl (meth)acrylate, butyl (meth)acrylate, 2-ethylhexyl (meth)acrylate, 2-hydroxyethyl (meth)acrylate, and benzyl (meth)acrylate (for example, a copolymer of 100 parts by mass of methyl methacrylate and 0.1 to 200 parts by mass, 1 to 180 parts by mass, or 10 to 150 parts by mass of at least one selected from the group consisting of methacrylic acid, butyl methacrylate, and benzyl methacrylate).

A glass transition temperature (Tg) of the (meth)acrylic resin may be 60°C or higher, for example. From the viewpoint of enhancing the adhesion of an image to a substrate, the glass transition temperature (Tg) is preferably 80°C or higher, and more preferably 100°C or higher. The glass transition temperature of the (meth)acrylic resin may be 200°C or lower, for example. The glass transition temperature of the (meth)acrylic resin may be in a range from 60°C to 200°C, in a range from 80°C to 200°C, or in a range from 100°C to 200°C, for example. In the present disclosure, the glass transition temperature is an estimated value determined from the FOX equation.

The weight average molecular weight of the (meth)acrylic resin is preferably in a range from 5,000 to 150,000, and is more preferably in a range from 10,000 to 100,000. From the viewpoint of water resistance and durability, the weight average molecular weight of the (meth)acrylic resin is preferably 5,000 or more, and more preferably 10,000 or more. From the viewpoint of the ink viscosity and jetting properties, the weight average molecular weight of the (meth)acrylic resin is preferably 150,000 or less, and more preferably 100,000 or less. In the present disclosure, the weight average molecular weight is a value obtained by the GPC method using standard polystyrene conversion.

As the (meth)acrylic resin, a synthetic resin may be used, or a commercially available resin may be used.

There are no particular limitations on a method for synthesizing the (meth)acrylic resin. The (meth)acrylic resin may be obtained by polymerizing one or two or more radical polymerizable monomers by means of solution polymerization or the like, for example. At least one monomer selected from the group consisting of (meth)acrylic acid and a (meth)acrylate ester may be polymerized, for example.

Although there are no particular limitations on a polymerization solvent (reaction solvent) used for the solution polymerization, it is preferable to use a solvent in which the (meth)acrylic resin obtained by polymerizing the monomers can be dissolved. The organic solvent S or the organic solvent A contained in the ink may be used as the polymerization solvent, from the viewpoint of the compatibility between the obtained (meth)acrylic resin and the organic solvent in the ink, and the preparation of the ink with a low viscosity thereby. When the ink contains two or more organic solvents as the organic solvent S or the organic solvent A, only one of them may be used as the polymerization solvent, for example.

A polymerization initiator, such as a radical polymerization initiator, may be used for performing a polymerization reaction.

As the radical polymerization initiator, it is possible to use known radical polymerization initiators including azo compounds such as 2,2'-azobis(isobutyronitrile) (AIBN), 2,2'-azobis(2,4'-dimethylvaleronitrile), and dimethyl 2,2'-azobisisobutyrate, and organic peroxides such as hydroperoxide-based compounds, dialkyl peroxide-based compounds, peroxyester-based compounds, and diallyl peroxide-based compounds. One of them may be used alone, or a combination of two or more may be used.

As the (meth)acrylic resin, it is preferable to use an acrylic resin obtained by solution polymerization of one or more radical polymerizable monomers with a radical polymerization initiator in the organic solvent S or the organic solvent A used in the ink, from the viewpoint of favorable compatibility between the (meth)acrylic resin and the solvent, and the preparation of an ink with a low viscosity thereby. When the ink contains two or more organic solvents as the organic solvent S or the organic solvent A, the (meth)acrylic resin may be a resin obtained by solution polymerization of one or more monomers using only one of the organic solvents as the polymerization solvent, for example.

Examples of commercially available products of the (meth)acrylic resin include "Neocryl B-728" and "Neocryl B-801" manufactured by Covestro AG, and "Dianal BR-83", "Dianal BR-87", and "Dianal MB-7333" manufactured by Mitsubishi Chemical Corporation (all product names).

The amount of the binder resin may be 1.0% by mass or more or 3.0% by mass or more, relative to the total amount of the ink, for example. Meanwhile, the amount of the binder resin may be 40.0% by mass or less, 30.0% by mass or less, or 20.0% by mass or less, relative to the total amount of the ink, for example. The amount of the binder resin may be in a range from 1.0% by mass to 40.0% by mass, in a range from 1.0% by mass to 30.0% by mass, or in a range from 3.0% by mass to 20.0% by mass, relative to the total amount of the ink, for example.

The ink Ia may contain water.

There are no particular limitations on the water, but it is preferably water in which ionic components are as minimal as possible. In particular, from the viewpoint of the storage stability of the ink, it is preferable that the amount contained of polyvalent metal ions such as calcium is small. Ion-exchanged water, distilled water, ultrapure water, or the like may be used as the water, for example.

From the viewpoint of reducing image bleeding, the amount of the water is preferably 3.0% by mass or more, more preferably 4.0% by mass or more, and even more preferably 4.5% by mass or more, relative to the total amount of the ink. When the amount of the water is 3.0% by mass or more, relative to the total amount of the ink, the drying properties of the ink are enhanced, and when printing on roll paper, transfer of an image during winding after printing can be suppressed. Meanwhile, from the viewpoint of enhancing the ink jetting properties, the amount of the water is preferably 10.0% by mass or less, more preferably 9.0% by mass or less, and even more preferably 8.0% by mass or less, relative to the total amount of the ink. The amount of the water is preferably in a range from 3.0% by mass to 10.0% by mass, more preferably in a range from 4.0% by mass to 9.0% by mass, and even more preferably in a range from 4.5% by mass to 8.0% by mass, relative to the total amount of the ink.

The amount of the water in the ink may be equal to the amount of water actively blended into the ink. Meanwhile, when an organic solvent having affinity with water is blended into the ink, the organic solvent may absorb water vapor or the like in the atmosphere, for example. In such a case, the amount of the water blended into the ink may not be equal to the amount of the water in the ink.

The amount of the water in the ink may be measured by means of the Karl Fischer method, for example.

The ink Ia may contain the organic solvent S. Examples of the organic solvent S include an organic solvent (organic solvent A) with a boiling point of 150°C or higher and lower than 200°C, and other organic solvents. Examples of other organic solvents include an organic solvent with a boiling point of lower than 150°C, and an organic solvent with a boiling point of 200°C or higher. Examples of the organic solvent with a boiling point of lower than 150°C include ethylene glycol monomethyl ether acetate. Examples of the organic solvent with a boiling point of 200°C or higher include γ-butyrolactone, and 2-pyrrolidone. The ink may contain one or two or more of the other organic solvents.

The organic solvent (organic solvent A) with a boiling point of 150°C or higher and lower than 200°C, may be any of a ketone-based organic solvent, an alcohol-based organic solvent, a glycol ether-based organic solvent, and an acetate-based organic solvent. One organic solvent A may be used alone, or a combination of two or more thereof may be used.

From the viewpoint of reducing image bleeding, the boiling point of the organic solvent A is preferably lower than 200°C, and more preferably 195°C or lower. Meanwhile, from the viewpoint of enhancing the ink jetting properties, the boiling point of the organic solvent A is preferably 150°C or higher, more preferably 160°C or higher, and even more preferably 170°C or higher.

The organic solvent A contained in the ink Ia may contain a water-soluble organic solvent (water-soluble organic solvent B) with a boiling point of 150°C or higher and lower than 200°C, and the organic solvent A may further contain a water-insoluble organic solvent with a boiling point of 150°C or higher and lower than 200°C.

Examples of the water-soluble organic solvent B, which may be contained in the organic solvent A, include diethylene glycol diethyl ether, diethylene glycol ethyl methyl ether, diethylene glycol isopropyl methyl ether, diethylene glycol dimethyl ether, ethylene glycol monobutyl ether, diethylene glycol monoethyl ether, diethylene glycol monomethyl ether, dipropylene glycol monomethyl ether, 3-methoxy-3-methyl-1-butanol, 3-methoxy-1-butanol, diethylene glycol monoethyl ether acetate, 1,2-propanediol, ethyl lactate, ethylene glycol, and ethylene glycol monoacetate. One organic solvent B may be used alone, or a combination of two or more thereof may be used.

Examples of the water-insoluble organic solvent with a boiling point of 150°C or higher and lower than 200°C, which may be contained in the organic solvent A, include ethylene glycol monobutyl ether acetate, ethylene glycol diacetate, dipropylene glycol dimethyl ether, propylene glycol 1-monobutyl ether, butyl lactate, hexyl propionate, and ethyl 3-ethoxypropionate. One water-insoluble organic solvent with a boiling point of 150°C or higher and lower than 200°C, may be used alone, or a combination of two or more thereof may be used.

From the viewpoint of enhancing the ink jetting properties and suppressing image bleeding, the amount of the organic solvent A is preferably 90.0% by mass or more, more preferably 95.0% by mass or more, and even more preferably 99.0% by mass or more, relative to the total amount of the organic solvent S contained in the ink. The amount of the organic solvent A may be 100% by mass, relative to the total amount of the organic solvent S contained in the ink. The amount of the organic solvent A may be in a range from 90.0% by mass to 100% by mass, in a range from 95.0% by mass to 100% by mass, or in a range from 99.0% by mass to 100% by mass, relative to the total amount of the organic solvent S contained in the ink, for example.

From the viewpoint of enhancing the ink jetting properties, the amount of the water-soluble organic solvent B is preferably 50.0% by mass or more, more preferably 60.0% by mass or more, even more preferably 70.0% by mass or more, even more preferably 80.0% by mass or more, and even more preferably 90.0% by mass or more, relative to the total amount of the organic solvent S contained in the ink. The amount of the water-soluble organic solvent B may be 100% by mass, relative to the total amount of the organic solvent S contained in the ink, for example. The amount of the water-soluble organic solvent B may be in a range from 50.0% by mass to 100% by mass, in a range from 60.0% by mass to 100% by mass, in a range from 70.0% by mass to 100% by mass, in a range from 80.0% by mass to 100% by mass, or in a range from 90.0% by mass to 100% by mass, relative to the total amount of the organic solvent S contained in the ink, for example.

From the viewpoint of making the binder resin stably exist in the ink, suppressing an increase in the viscosity of the ink, and further enhancing the jetting properties, the water-soluble organic solvent B preferably contains a water-soluble organic solvent Bx having a Hansen solubility parameter (HSP value) of 25.0 MPa^{1/2} or less, and a boiling point of 150°C or higher and lower than 200°C.

The HSP value of the water-soluble organic solvent Bx may be 23.0 MPa^{1/2} or less, for example. Meanwhile, the HSP value of the water-soluble organic solvent Bx may be 10.0 MPa^{1/2} or more or 15.0 MPa^{1/2} or more, for example. The HSP value of the water-soluble organic solvent Bx may be in a range from 10.0 MPa^{1/2} to 25.0 MPa^{1/2} or in a range from 15.0 MPa^{1/2} to 23.0 MPa^{1/2}, for example.

The Hansen solubility parameter was proposed by Hansen in 1967. The solubility parameter introduced by Hildebrand was divided into 3 components, a dispersion term δ_{D}, a polar term δ_{P}, and a hydrogen bond term δ_{H}, and expressed in a three-dimensional space. The dispersion term indicates an effect by the dispersion force, the polar term indicates an effect by the dipole-dipole force, and the hydrogen bond term indicates an effect of the hydrogen bonding force.

The details are explained in POLYMER HANDBOOK. FOURTH EDITION. (Editors. J. BRANDRUP, E. H. IMMERGUT, and E. A. GRULKE.).

The present disclosure uses values obtained by calculation using calculation software for Hansen solubility parameters proposed by Charles. M. Hansen et al. "HSPiP: Hansen Solubility Parameters in Practice" ver. 5.3.

Examples of the water-soluble organic solvent Bx include diethylene glycol diethyl ether, diethylene glycol ethyl methyl ether, diethylene glycol isopropyl methyl ether, diethylene glycol dimethyl ether, ethylene glycol monobutyl ether, diethylene glycol monoethyl ether, diethylene glycol monomethyl ether, dipropylene glycol monomethyl ether, 3-methoxy-3-methyl-1-butanol, 3-methoxy-1-butanol, diethylene glycol monoethyl ether acetate, ethyl lactate, and ethylene glycol monoacetate. One water-soluble organic solvent Bx may be used alone, or a combination of two or more thereof may be used.

From the viewpoint of further enhancing the jetting properties, the amount of the water-soluble organic solvent Bx is preferably 50.0% by mass or more, more preferably 75.0% by mass or more, even more preferably 80.0% by mass or more, or even more preferably 90.0% by mass or more, relative to the total amount of the water-soluble organic solvent B. Meanwhile, the amount of the water-soluble organic solvent Bx may be 100% by mass, relative to the total amount of the water-soluble organic solvent B. The amount of the water-soluble organic solvent Bx may be in a range from 50.0% by mass to 100% by mass, in a range from 75.0% by mass to 100% by mass, in a range from 80.0% by mass to 100% by mass, or in a range from 90.0% by mass to 100% by mass, relative to the total amount of the water-soluble organic solvent B, for example.

Assuming that the amount of the water, relative to the total amount of the ink, is W% by mass, that the viscosity a (mPa·s) is the viscosity at 23°C of the mixture Ma of the organic solvent S and water in which a mass ratio between the organic solvent S and the water (organic solvent S : water) is 99:1, and that the viscosity b (mPa·s) is the viscosity at 23°C of the mixture Mb of the organic solvent S and water in which a mass ratio between the organic solvent S and the water (organic solvent S : water) is 100 - W : W, then a ratio a/b between the viscosity a and the viscosity b may be 0.95 or less, for example. The ratio a/b may be 0.90 or less or 0.85 or less, for example. Meanwhile, the ratio a/b may be 0.50 or more, 0.55 or more, or 0.60 or more, for example. The ratio a/b may be in a range from 0.50 to 0.95, in a range from 0.55 to 0.90, or in a range from 0.60 to 0.85, for example.

As a viscosity measuring apparatus, it is possible to use "Rheometer MCR302" manufactured by Anton Paar Japan K.K., for example. The mixture Ma and the mixture Mb may be prepared by means of the method described for the ink Ib, for example.

The ink Ia preferably contains a surfactant. From the viewpoint of making the wet spreading of the ink favorable even on a surface of a substrate with hydrophobicity, and increasing a drying speed to form a favorable image, the ink preferably contains a surfactant, for example. Examples of the surfactant include a silicone-based surfactant, a fluorine-based surfactant, and a polyoxyethylene derivative that is a nonionic surfactant.

Examples of the silicone-based surfactant include polyester-modified silicone, and polyether-modified silicone. Examples of commercially available products of the silicone-based surfactant include "BYK-307", "BYK-313", "BYK-330", "BYK-333", "BYK-342", "BYK-370", "BYK-377", "BYK-378", "BYK-3550", "BYK-3750", "BYK-3761", "BYK-3762", "BYK-3764" and "BYK-SILCLEAN 3700" manufactured by BYK-Chemie Japan K.K., and "Silface SAG005", "Silface SAG008", and "Silface SAG503A" manufactured by Nissin Chemical Industry Co., Ltd. (all product names).

Examples of commercially available products of the fluorine-based surfactant include "BYK-340" manufactured by BYK-Chemie Japan K.K., and "SURFLON S-241", "SURFLON S-242", "SURFLON S-242L", "SURFLON S-243" "SURFLON S-420", and "SURFLON S-431" manufactured by AGC Seimi Chemical Co., Ltd. (all product names).

As the polyoxyethylene derivatives, it is preferable to use acetylene glycol-based surfactants. Examples of commercially available products of the acetylene glycol-based surfactants include "SURFYNOL 420", "SURFYNOL 440", "SURFYNOL 465", and "SURFYNOL 485" manufactured by Evonik Industries AG, and "OLFINE E-1004" and "OLFINE-1010" manufactured by Nissin Chemical Industry Co., Ltd. (all product names).

The ink Ia preferably contains a silicone-based surfactant, from the viewpoints of continuous jetting properties during printing and color development properties of an image.

One surfactant may be used alone, or two or more surfactants may be used in combination.

The amount of the surfactant is preferably in a range from 0.05% by mass to 2% by mass, and more preferably in a range from 0.1% by mass to 1% by mass, relative to the total amount of the ink.

The ink Ia may contain various additives depending on usage application. Examples of the additives include a UV absorber, a light stabilizer, an antioxidant, and a plasticizer.

### <Inkjet ink Ib>

In one embodiment, an inkjet ink Ib containing a colorant, a binder resin, water, and an organic solvent S is provided, in which the amount of the water, relative to the total amount of the ink, is in a range from 3.0% by mass to 10.0% by mass, the organic solvent S contains an organic solvent A with a boiling point of 150°C or higher and lower than 200°C, in an amount of 90.0% by mass or more, relative to the total amount of the organic solvent S, and, assuming that the amount of the water, relative to the total amount of the ink, is W% by mass, that a viscosity a (mPa·s) is a viscosity at 23°C of a mixture Ma in which a mass ratio between the organic solvent S and the water (organic solvent S : water) is 99: 1, and that a viscosity b (mPa·s) is a viscosity at 23°C of a mixture Mb in which a mass ratio between the organic solvent S and the water (organic solvent S : water) is 100 - W : W, then a ratio a/b between the viscosity a and the viscosity b is 0.95 or less.

The ink Ib can contain a colorant. The ink Ib can contain a pigment, a dye, or a combination thereof as the colorant.

The description made for the ink Ia can be applied to the colorant contained in the ink Ib, and to the amount thereof.

When the ink Ib contains a pigment, a pigment dispersant can be used together with the pigment, in order to stably disperse the pigment in the ink. The description made for the ink Ia can be applied to the pigment dispersant in the ink Ib, and to the amount thereof.

The ink Ib can contain a binder resin. The description made for the ink Ia can be applied to the binder resin contained in the ink Ib, and to the amount thereof.

The ink Ib can contain water. The description made for the ink Ia can be applied to the water contained in the ink Ib, and to the amount thereof.

The ink Ib may contain the organic solvent S. Examples of the organic solvent S include an organic solvent (organic solvent A) with a boiling point of 150°C or higher and lower than 200°C, and other organic solvents. Examples of other organic solvents include an organic solvent with a boiling point of lower than 150°C, and an organic solvent with a boiling point of 200°C or higher. Examples of the organic solvent with a boiling point of lower than 150°C include ethylene glycol monomethyl ether acetate. Examples of the organic solvent with a boiling point of 200°C or higher include γ-butyrolactone, and 2-pyrrolidone. The ink may contain one or two or more of other organic solvents above.

The organic solvent (organic solvent A) with a boiling point of 150°C or higher and lower than 200°C, may be any of a ketone-based organic solvent, an alcohol-based organic solvent, a glycol ether-based organic solvent, and an acetate-based organic solvent. One organic solvent A may be used alone, or a combination of two or more may be used.

From the viewpoint of reducing image bleeding, the boiling point of the organic solvent A is preferably lower than 200°C, and more preferably 195°C or lower. Meanwhile, from the viewpoint of enhancing the ink jetting properties, the boiling point of the organic solvent A is preferably 150°C or higher, more preferably 160°C or higher, and even more preferably 170°C or higher.

The organic solvent A contained in the ink Ib may contain a water-soluble organic solvent B with a boiling point of 150°C or higher and lower than 200°C, a water-insoluble organic solvent with a boiling point of 150°C or higher and lower than 200°C, or a combination thereof.

Examples of the water-soluble organic solvent B contained in the organic solvent A include those exemplified in the description of the ink Ia. One of them may be used alone, or a combination of two or more may be used.

Examples of the water-insoluble organic solvent with a boiling point of 150°C or higher and lower than 200°C, contained in the organic solvent A include those exemplified in the description of the ink Ia. One water-insoluble organic solvent with a boiling point of 150°C or higher and lower than 200°C may be used alone, or a combination of two or more thereof may be used.

From the viewpoint of enhancing the ink jetting properties and suppressing image bleeding, the amount of the organic solvent A is preferably 90.0% by mass or more, more preferably 95.0% by mass or more, and even more preferably 99.0% by mass or more, relative to the total amount of the organic solvent S contained in the ink. The amount of the organic solvent A may be 100% by mass, relative to the total amount of the organic solvent S contained in the ink. The amount of the organic solvent A may be in a range from 90.0% by mass to 100% by mass, in a range from 95.0% by mass to 100% by mass, or in a range from 99.0% by mass to 100% by mass, relative to the total amount of the organic solvent S contained in the ink, for example.

The amount of the water-soluble organic solvent B may be 20.0% by mass or more, 50.0% by mass or more, 60.0% by mass or more, 70.0% by mass or more, 80.0% by mass or more, or 90.0% by mass or more, relative to the total amount of the organic solvent S contained in the ink, for example. The amount of the water-soluble organic solvent B may be 100% by mass, relative to the total amount of the organic solvent S contained in the ink, for example. The amount of the water-soluble organic solvent B may be in a range from 20.0% by mass to 100% by mass, in a range from 50.0% by mass to 100% by mass, in a range from 60.0% by mass to 100% by mass, in a range from 70.0% by mass to 100% by mass, in a range from 80.0% by mass to 100% by mass, or in a range from 90.0% by mass to 100% by mass, relative to the total amount of the organic solvent S contained in the ink, for example.

From the viewpoint of enhancing the ink jetting properties, assuming that the amount of the water, relative to the total amount of the ink, is W% by mass, that the viscosity a (mPa·s) is the viscosity at 23°C of the mixture Ma of the organic solvent S and water in which a mass ratio between the organic solvent S and the water (organic solvent S : water) is 99: 1, and that the viscosity b (mPa·s) is the viscosity at 23°C of the mixture Mb of the organic solvent S and water in which a mass ratio between the organic solvent S and the water (organic solvent S : water) is 100 - W : W; then it is preferable that a ratio a/b between the viscosity a and the viscosity b is 0.95 or less. The ratio a/b may be 0.90 or less or 0.85 or less, for example. Meanwhile, the ratio a/b may be 0.50 or more, 0.55 or more, or 0.60 or more, for example. The ratio a/b may be in a range from 0.50 to 0.95, in a range from 0.55 to 0.90, or in a range from 0.60 to 0.85, for example.

The mixture Ma can be obtained by measuring the amount of water contained in the organic solvent S by means of the Karl Fischer method and adjusting such that the amount of water relative to the total of the organic solvent S and the water is 1% by mass, for example.

The mixture Mb can be obtained by measuring the amount of water contained in the organic solvent S by means of the Karl Fischer method and adjusting such that the amount of water relative to the total of the organic solvent S and the water is W% by mass, which is the same as the amount of the water relative to the total amount of the ink.

Further, if the amount of water contained in the organic solvent S is too large, for example, if the amount of water is more than 1% by mass, dehydration may be performed thereto using any of various means. As the dehydration means, a method using porous materials such as molecular sieves is preferable, for example. In this case, the porous materials or dehydrating agents may be added to the solvent, they may be mixed by means of a method such as stirring, and dehydration may be performed. Thereafter, the porous materials may be removed by means such as filtration.

As a viscosity measuring apparatus, it is possible to use "Rheometer MCR302" manufactured by Anton Paar Japan K.K., for example.

There are no particular limitations on a method for setting the ratio a/b to be 0.95 or less. If a mixing ratio of a mixture of water and an organic solvent is in a specific range, an example of the method above may be a method in which, as the organic solvent S, an organic solvent with which the viscosity of the mixture is higher than the viscosity of the water and also higher than the viscosity of the organic solvent, that is, an organic solvent with which the viscosity of the mixture with a specific mixing ratio exhibits a maximum value. The reason why the viscosity exhibits a maximum value in this way is often due to intermolecular interaction between the water and the organic solvent, for example. Therefore, the organic solvent may be selected using a Hansen solubility parameter (HSP value) as an index. Specifically, when the organic solvent S contains an organic solvent with a small HSP value, the viscosity of the mixture of the water and the organic solvent S can exhibit a maximum value. Therefore, the ratio a/b can be set to be 0.95 or less by adjusting the amount of the water relative to the total amount of the ink (W% by mass).

From the viewpoint of enhancing the storage stability of the ink and more effectively suppressing an increase in the viscosity of the ink, the organic solvent A preferably contains an organic solvent Ax having a Hansen solubility parameter (HSP value) of 25.0 MPa^{1/2} or less, and a boiling point of 150°C or higher and lower than 200°C. The HSP value of the organic solvent Ax is more preferably 23.0 MPa^{1/2} or less. The HSP value of the organic solvent Ax may be 10.0 MPa^{1/2} or more or 15.0 MPa^{1/2} or more, for example. The HSP value of the organic solvent Ax may be in a range from 10.0 MPa^{1/2} to 25.0 MPa^{1/2} or in a range from 15.0 MPa^{1/2} to 23.0 MPa^{1/2}, for example.

As the organic solvent Ax, it is possible to use a water-soluble organic solvent Bx having an HSP value of 25.0 MPa^{1/2} or less and a boiling point of 150°C or higher and lower than 200°C, a water-insoluble organic solvent having an HSP value of 25.0 MPa^{1/2} or less and a boiling point of 150°C or higher and lower than 200°C, or a combination thereof. Examples of the water-soluble organic solvent Bx as the organic solvent Ax include those listed as examples of the water-soluble organic solvent Bx in the description of the ink Ia. One of them may be used alone, or a combination of two or more of them may be used.

Examples of the water-insoluble organic solvent as the organic solvent Ax include ethylene glycol monobutyl ether acetate, ethylene glycol diacetate, propylene glycol diacetate, dipropylene glycol dimethyl ether, propylene glycol 1-monobutyl ether, butyl lactate, hexyl propionate, and ethyl 3-ethoxypropionate. One of these water-insoluble organic solvents may be used alone, or a combination of two or more thereof may be used.

From the viewpoint of enhancing the storage stability of ink, it is preferable to use an organic solvent with an ether bond as the organic solvent Ax. Examples of this kind of organic solvent include an alkylene glycol monoalkyl ether having an HSP value of 25.0 MPa^{1/2} or less, and a boiling point of 150°C or higher and lower than 200°C, and an alkylene glycol dialkyl ether having an HSP value of 25.0 MPa^{1/2} or less and a boiling point of 150°C or higher and lower than 200°C. Since the ether bond has a relatively low reactivity, there is a tendency that reaction with water or hydrolyzation is less likely to occur, and the ether bond can enhance the storage stability of the ink containing water.

From the viewpoint of enhancing the storage stability of the ink, it is preferable that the organic solvent Ax contains at least one selected from the group consisting of an alkylene glycol monoalkyl ether having an HSP value of 25.0 MPa^{1/2} or less and a boiling point of 150°C or higher and lower than 200°C, and an alkylene glycol dialkyl ether having an HSP value of 25.0 MPa^{1/2} or less and a boiling point of 150°C or higher and lower than 200°C, in an amount of 50.0% by mass or more, relative to the organic solvent Ax.

The amount of the organic solvent Ax is preferably 20% by mass or more, more preferably 40% by mass or more, and even more preferably 60% by mass or more, relative to the total amount of the organic solvent S. Meanwhile, the amount of the organic solvent Ax may be 100% by mass, relative to the total amount of the organic solvent S, for example. The amount of the organic solvent Ax is preferably in a range from 20% by mass to 100% by mass, more preferably in a range from 40% by mass to 100% by mass, and even more preferably in a range from 60% by mass to 100% by mass, relative to the total amount of the organic solvent S.

### <Method for producing ink>

There are no particular limitations on a method for producing the inks Ia and Ib, but as one method, each component can be mixed and stirred, either in a single batch or in a number of separate batches, to produce the inks. More specifically, the inks can be produced by using a dispersion device such as a bead mill, to disperse all components, either in a single batch or in a number of separate batches, and then passing the dispersion through a filtration device such as a membrane filter if desired, for example.

In the method for producing the inks, a pigment may be mixed and stirred with a pigment dispersant, an organic solvent, and the like, to produce a pigment dispersion in advance, for example.

### <Ink viscosity>

The suitable range of the viscosity of the inks Ia and Ib varies depending on, for example, the diameter of a jetting head nozzle and the jetting environment in an inkjet recording system. Generally, the viscosity is preferably in a range from 3 mPa·s to 30 mPa·s, more preferably in a range from 3 mPa·s to 15 mPa s, and even more preferably in a range from 4 mPa·s to 10 mPa·s, at 23°C. In the present disclosure, the ink viscosity is a numerical value obtained through measurement at 23°C. As a viscosity measuring apparatus, it is possible to use "Rheometer MCR302" manufactured by Anton Paar Japan K.K., for example.

### <Printing method>

There are no particular limitations on a printing method using the ink Ia and/or the ink Ib, and any system such as a piezo system, an electrostatic system, or a thermal system may be used. When an inkjet recording apparatus is used, it is preferable that the ink according to one embodiment is jetted from an inkjet head based on a digital signal, such that the jetted ink droplets adhere to a substrate. The printing method may include steps such as a pretreatment step and a heating step. In the pretreatment step, a pretreatment liquid may be adhered to the substrate, prior to the adhesion of the ink to the substrate. A pretreatment liquid described later may be used as the pretreatment liquid.

In the present embodiment, there are no particular limitations on the substrate, and it is possible to use printing paper such as plain paper, coated paper, and specialty paper, a fabric, an inorganic sheet, a film, an OHP sheet, and an adhesive sheet having one of the above substrates as a base material and having an adhesive layer on a back surface thereof. The ink of the embodiment can preferably be used for a plastic substrate such as a vinyl chloride resin or an olefin resin, for example. Examples of the olefin resin include a polypropylene resin. This kind of plastic substrate may be an absorbent substrate which can absorb the applied ink, such as a substrate with an ink absorbing layer, or may be a non-absorbent substrate without an ink absorbing layer. The ink of an embodiment can preferably be used for a substrate which is difficult for the ink to penetrate. Meanwhile, the olefin resin tends to have a low affinity with organic solvents in inks, and therefore it may be difficult to obtain adhesion of an image to the substrate. However, when the ink of an embodiment is used, it is possible to obtain favorable adhesion of an image to the substrate using the olefin resin. The ink of an embodiment can preferably be used for synthetic paper made of an olefin resin such as a polypropylene resin.

### <Ink set>

An ink set of an embodiment may include the above-described inkjet ink Ia or inkjet ink Ib, and a pretreatment liquid.

From the viewpoint of enhancing tone reproduction characteristics, it is preferable that the ink set includes the above-described inkjet ink Ia or inkjet ink Ib, and a pretreatment liquid containing an aggregating agent and water in an amount of more than 10.0% by mass relative to the total amount of the pretreatment liquid.

The above-described inkjet ink Ia or inkjet ink Ib has excellent ink drying properties, and when the ink is used, it is possible to form an image with little bleeding. When the ink is used together with the pretreatment liquid containing the aggregating agent, and water in an amount of more than 10.0% by mass relative to the total amount of the pretreatment liquid, image bleeding can be more effectively reduced, and an image with excellent tone reproduction characteristics can be obtained. Although not constrained by any particular theory, the reasons for the above are speculated to be as follows. Due to the pretreatment liquid containing water, which is relatively highly volatile, in an amount of more than 10.0% by mass, the drying properties of the pretreatment liquid are enhanced, and image bleeding can be more effectively reduced. Further, when the ink and the pretreatment liquid come into contact with each other, aggregation of the ink components and an increase in viscosity are effectively caused due to the aggregating agent in the pretreatment liquid and the water contained in the pretreatment liquid in an amount of more than 10.0% by mass. In this way, it is considered that image bleeding can be effectively reduced, and thereby an image with excellent tone reproduction characteristics can be obtained.

In addition, when this ink set is used, image bleeding can be easily suppressed, even if the ink is applied in a state where the pretreatment liquid is not completely dried. Therefore, image bleeding can be reduced, and an image with excellent tone reproduction characteristics can be obtained, even for a printing substrate with low heat resistance which is difficult to be dried at high temperatures.

The ink set may contain one ink or a combination of two or more inks. The ink set may contain either one of the inkjet ink Ia and inkjet ink Ib, or a combination thereof.

The pretreatment liquid may contain an aggregating agent.

As the aggregating agent, it is possible to use a component having an action of aggregating components such as colorants contained in the ink. Examples of the aggregating agent include a polyvalent metal salt, a cationic water-soluble resin, and a cationic water-dispersible resin. One of them may be used alone, or a combination of two or more of them may be used.

From the viewpoint of more effective aggregation of ink components and further enhancing tone reproduction characteristics, it is preferable that the aggregating agent contains a polyvalent metal salt, a cationic water-soluble resin, or a combination thereof.

Examples of the polyvalent metal salt include a divalent or higher metal halide, nitrate, sulfate, acetate, fatty acid salt, lactate, and chlorate. As the halide, it is preferable to use chloride, bromide, iodide, or the like. Examples of the divalent or higher metal include divalent alkaline earth metals such as Mg, Ca, Sr, and Ba, divalent metals such as Ni, Zn, Cu, and Fe(II), and trivalent metals such as Fe(III) and Al. Specific examples of the polyvalent metal salt include calcium chloride, calcium nitrate, magnesium chloride, magnesium sulfate hexahydrate, and magnesium acetate tetrahydrate. One of them may be used alone or, a combination of two or more of them may be used.

From the viewpoint of more effective aggregation of ink components and further enhancing tone reproduction characteristics, the amount of the polyvalent metal salt may be preferably 0.1% by mass or more, more preferably 0.5% by mass or more, even more preferably 1.0% by mass or more, relative to the total amount of the pretreatment liquid, for example. The amount of the polyvalent metal salt may be 2.0% by mass or more relative to the total amount of the pretreatment liquid, for example. The amount of the polyvalent metal salt may be 20.0% by mass or less, or 10.0% by mass or less, relative to the total amount of the pretreatment liquid. The amount of the polyvalent metal salt may be in a range from 0.1% by mass to 20.0% by mass, in a range from 0.5% by mass to 10.0% by mass, in a range from 1.0% by mass to 10.0% by mass, or in a range from 2.0% by mass to 10.0% by mass, relative to the total amount of the pretreatment liquid, for example. In cases where a hydrate is used as the polyvalent metal salt, the amount of the polyvalent metal salt refers to the equivalent amount of anhydride.

Examples of the cationic water-soluble resin include polyethyleneimine, polyvinylamine, polyallylamine and salts thereof, polyvinylpyridine, copolymers of cationic acrylamide, and a cationic modified polyvinyl alcohol. One of them may be used alone, or two or more of them may be used in combination.

The amount of the cationic water-soluble resin is preferably 0.1% by mass or more, and more preferably 0.5% by mass or more, relative to the total amount of the pretreatment liquid. The amount of the cationic water-soluble resin may be 10.0% by mass or less, 5.0% by mass or less, or 2.0% by mass or less, relative to the total amount of the pretreatment liquid. The amount of the cationic water-soluble resin may be in a range from 0.1% by mass to 10.0% by mass, in a range from 0.1% by mass to 5.0% by mass, or in a range from 0.2% by mass to 2.0% by mass, relative to the total amount of the pretreatment liquid, for example.

The cationic water-dispersible resin is in the form of positively charged resin particles in which the surfaces of the resin particles carry a positive charge, and these particles can be dispersed in particulate form, without dissolution in water, to form an oil-in-water (O/W) emulsion. The cationic water-dispersible resin may be a resin having cationic functional groups existing at the surfaces of the particles, such as a self-emulsifying resin, or may be a resin that has been subjected to a surface treatment such as adhering a cationic dispersant to the resin particle surfaces.

Examples of the cationic water-dispersible resin include conjugated diene-based resins such as styrene-butadiene copolymers, methyl methacrylate-butadiene copolymers, and vinyl chloride-vinyl acetate copolymers; acrylic-based resins such as acrylate ester polymers and methacrylate ester polymers, and copolymers of these compounds with styrene or the like; vinyl-based resins such as ethylene-vinyl acetate copolymers, or functional group-modified resins in which a carboxyl group or the like of any of these resins has been modified with a functional group-containing monomer; as well as melamine resins, urea resins, polyurethane resins, polyester resins, polyolefin resins, silicone resins, polyvinyl butyral resins, and alkyd resins. Resin emulsions containing one of these resins may be used, but hybrid resin emulsions may also be used. One of them may be used alone, or two or more of them may be used in combination.

The amount of the cationic water-dispersible resin is preferably 0.5% by mass or more, more preferably 1.0% by mass or more, and even more preferably 2.0% by mass or more, relative to the total amount of the pretreatment liquid. The amount of the cationic water-dispersible resin may be 20.0% by mass or less or 15.0% by mass or less, relative to the total amount of the pretreatment liquid. The amount of the cationic water-dispersible resin may be in a range from 0.5% by mass to 20.0% by mass, in a range from 1.0% by mass to 20.0% by mass, or in a range from 2.0% by mass to 15.0% by mass, relative to the total amount of the pretreatment liquid, for example.

The amount of the aggregating agent may be 0.1% by mass or more, 0.5% by mass or more, or 1.0% by mass or more, relative to the total amount of the pretreatment liquid, for example. The amount of the aggregating agent may be 20.0% by mass or less, 15.0% by mass or less, or 10.0% by mass or less, relative to the total amount of the pretreatment liquid, for example. The amount of the aggregating agent may be in a range from 0.1% by mass to 20% by mass, in a range from 0.5% by mass to 15.0% by mass, or in a range from 1.0% by mass to 10.0% by mass, relative to the total amount of the pretreatment liquid, for example.

The pretreatment liquid may contain water. There are no particular limitations on the water to be blended into the pretreatment liquid, but ion-exchanged water, distilled water, ultrapure water, or the like may be used, for example.

From the viewpoint of enhancing drying properties, reducing image bleeding, and enhancing tone reproduction characteristics, the amount of the water is preferably more than 10.0% by mass, more preferably 20.0% by mass or more, and even more preferably 40.0% by mass or more, relative to the total amount of the pretreatment liquid. When the water is contained in the pretreatment liquid in an amount of more than 10.0% by mass, relative to the total amount of the pretreatment liquid, the stability of the ink in contact with the pretreatment liquid effectively breaks down, and aggregation and an increase in viscosity of ink components are likely to occur. Further, due to the pretreatment liquid containing relatively highly volatile water in an amount of more than 10.0% by mass, the drying properties of the pretreatment liquid can be enhanced, and image bleeding can be effectively reduced. The amount of the water may be 99.9% by mass or less or 99.0% by mass or less, relative to the total amount of the pretreatment liquid, for example. The amount of the water may be in a range from more than 10.0% by mass to 99.5% by mass or less, in a range from 20.0% by mass to 99.0% by mass, or in a range from 40.0% by mass to 99.0% by mass, relative to the total amount of the pretreatment liquid, for example.

The amount of the water in the pretreatment liquid may be equal to the amount of water actively blended into the pretreatment liquid. Meanwhile, when an organic solvent having affinity with water is blended into the pretreatment liquid, the organic solvent may absorb water vapor or the like in the atmosphere, for example. In such a case, the amount of the water blended into the pretreatment liquid may not be equal to the amount of the water in the ink.

The amount of the water in the pretreatment liquid may be measured by means of the Karl Fischer method, for example.

The pretreatment liquid may contain a binder resin. Examples of the binder resin include the resins listed as examples of the binder resin in the description of the ink Ia. The amount of the binder resin may be in a range from 1% by mass to 20% by mass or in a range from 3% by mass to 15% by mass, relative to the total amount of the pretreatment liquid, for example.

The pretreatment liquid may contain a water-soluble organic solvent. An organic compound that is a liquid at room temperature and can be dissolved in water can be used as the water-soluble organic solvent. The use of a water-soluble organic solvent that mixes uniformly with an equal volume of water at 1 atmosphere and 20°C is preferred. Examples of water-soluble organic solvents that may be used include lower alcohols such as methanol, ethanol, 1-propanol, isopropanol, 1-butanol, 2-butanol, isobutanol, and 2-methyl-2-propanol; glycols such as ethylene glycol, diethylene glycol, triethylene glycol, tetraethylene glycol, polyethylene glycol, propylene glycol, dipropylene glycol, tripropylene glycol, and polypropylene glycol; glycerols such as glycerol, diglycerol, triglycerol, and polyglycerol; acetins such as monoacetin and diacetin; glycol ethers such as ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, triethylene glycol monomethyl ether, triethylene glycol monoethyl ether, triethylene glycol monopropyl ether, triethylene glycol monobutyl ether, tetraethylene glycol monomethyl ether, tetraethylene glycol monoethyl ether, tetraethylene glycol dimethyl ether, and tetraethylene glycol diethyl ether; and triethanolamine, 1-methyl-2-pyrrolidone, 1,3-dimethyl-2-imidazolidinone, β-thiodiglycol, and sulfolane. The boiling point of the water-soluble organic solvent is preferably 100°C or higher, and more preferably 150°C or higher.

One of these water-soluble organic solvents may be used alone, or a combination of two or more water-soluble organic solvents may be used, provided the solvents form a single phase with water. The amount of the water-soluble organic solvent contained, relative to the amount of the pretreatment liquid may be in a range from 10% by mass to 80% by mass, for example.

The pretreatment liquid may contain a surfactant. Examples of the surfactant include the surfactants exemplified in the description of the ink Ia. The amount of the surfactant may be about in a range from 0.1% by mass to 5% by mass, relative to the total amount of the pretreatment liquid.

A method for producing the pretreatment liquid is not particularly limited. The pretreatment liquid can be appropriately produced using typical methods, for example. The pretreatment liquid can be produced by using a stirring device such as a three-one motor to mix or disperse all components, either in a single batch or in a number of separate batches, and then passing the resulting dispersion through a filtration device such as a membrane filter if desired, for example.

### <Method for producing printed matter>

A method for producing a printed matter of one embodiment can include applying an ink to a substrate by means of an inkjet method. The ink Ia or the ink Ib of the embodiments described above can be used as the ink. Further, the substrate described above can be used as the substrate.

In the step of applying an ink to a substrate, it is preferable that an ink is applied to a substrate by means of an inkjet method. There are no particular limitations on the inkjet method, and any one of a piezo method, electrostatic method, and thermal method may be used.

The amount of an ink applied to a substrate is preferably in a range from 1 g/m² to 500 g/m², more preferably in a range from 3 g/m² to 100 g/m², even more preferably in a range from 5 g/m² to 50 g/m², and most preferably in a range from 10 g/m² to 30 g/m².

The method for producing a printed matter may include steps such as a pretreatment step and a heating step.

The method for producing a printed matter may include applying a pretreatment liquid to a substrate, and applying an ink to a substrate by means of an inkjet method, for example. The pretreatment liquid described above can be used as the pretreatment liquid. When the pretreatment liquid containing the above described aggregating agent and water, in an amount of more than 10.0% by mass, relative to the total amount of the pretreatment liquid is used, it is possible to effectively reduce image bleeding and enhance tone reproduction characteristics.

A method for applying a pretreatment liquid is not particularly limited. As the method for applying the pretreatment liquid, the pretreatment liquid may be applied uniformly to a surface of a printing substrate using, for example, a brush, roller, bar coater, air knife coater, spray, or the like. Alternatively, the pretreatment liquid may be applied by printing an image by printing means such as inkjet printing, gravure printing, or flexographic printing. That is, the pretreatment liquid may be applied to the entire surface of the substrate, or may be applied only to a necessary portion, for example, only to a portion to which the ink is applied.

The amount of the pretreatment liquid applied to the substrate is preferably in a range from 1 g/m² to 500 g/m², more preferably in a range from 3 g/m² to 100 g/m², and even more preferably in a range from 5 g/m² to 50 g/m².

The present disclosure includes the following embodiments.
<1> An inkjet ink including:
   a colorant;
   a binder resin;
   water; and
   an organic solvent S, in which
   the amount of the water is in a range from 3.0% by mass to 10.0% by mass, relative to the total amount of the ink,
   the organic solvent S includes an organic solvent A with a boiling point of 150°C or higher and lower than 200°C, in an amount of 90.0% by mass or more, relative to the total amount of the organic solvent S, and
   the organic solvent A includes a water-soluble organic solvent B with a boiling point of 150°C or higher and lower than 200°C, in an amount of 50.0% by mass or more, relative to the total amount of the organic solvent S.
<2> The inkjet ink according to <1>, in which
   the water-soluble organic solvent B includes a water-soluble organic solvent Bx having a Hansen solubility parameter (HSP value) of 25.0 MPa^{1/2} or less, and a boiling point of 150°C or higher and lower than 200°C.
<3> The inkjet ink according to <2>, in which
   the amount of the water-soluble organic solvent Bx is 75.0% by mass or more, relative to the total amount of the water-soluble organic solvent B.
<4> An inkjet ink including:
   a colorant;
   a binder resin; water; and
   an organic solvent S, in which
   the amount of the water is in a range from 3.0% by mass to 10.0% by mass, relative to the total amount of the ink,
   the organic solvent S includes an organic solvent A with a boiling point of 150°C or higher and lower than 200°C, in an amount of 90.0% by mass or more, relative to the total amount of the organic solvent S, and
   assuming that the amount of the water, relative to the total amount of the ink, is W% by mass, that a viscosity a (mPa·s) is a viscosity at 23°C of a mixture Ma of the organic solvent S and water in which a mass ratio between the organic solvent S and the water (organic solvent S : water) is 99: 1, and that a viscosity b (mPa s) is a viscosity at 23°C of a mixture Mb of the organic solvent S and water in which a mass ratio between the organic solvent S and the water (organic solvent S : water) is 100 - W : W, then a ratio a/b between the viscosity a and the viscosity b is 0.95 or less.
<5> The inkjet ink according to <4>, in which
   the organic solvent A includes an organic solvent Ax including a Hansen solubility parameter (HSP value) of 25.0 MPa^{1/2} or less, and a boiling point of 150°C or higher and lower than 200°C.
<6> The inkjet ink according to any one of <1> to <5>, in which
   the binder resin includes a (meth)acrylic resin.
<7> An inkjet ink set including:
   the inkjet ink according to any one of <1> to <6>;
   and a pretreatment liquid including
      an aggregating agent and
      water in an amount of more than 10.0% by mass, relative to the total amount of the pretreatment liquid.
<8> The inkjet ink set according to <7>, in which
   the aggregating agent includes at least one selected from the group consisting of a polyvalent metal salt and a cationic water-soluble resin.

### EXAMPLES

The present invention will be described below in further detail using a series of examples, but the present invention is in no way limited by the following examples.

### <Production of pigment dispersion>

Each material shown in Table 1 was measured and put into a beaker at the ratio shown in Table 1, they were premixed, and then transferred to a plastic container with a lid. Zirconia beads with a diameter of 0.8 mm were added thereto, and a dispersion treatment was performed for 60 minutes using a rocking mill RM-05 (manufactured by Seiwa Giken Co., Ltd.). Thereafter, the beads were separated from the obtained dispersion liquid to produce pigment dispersions 1 to 5 all having a pigment concentration of 20% by mass.

The details of the materials shown in Table 1 will be described later.

**[Table 1]**

| Table 1 Formulation of pigment dispersion (unit:% by mass) | | Pigment dispersion 1 | Pigment dispersion 2 | Pigment dispersion 3 | Pigment dispersion 4 | Pigment dispersion 5 |
|---|---|---|---|---|---|---|
| Pigment | Pigment 1 | 20.0 | | 20.0 | 20.0 | 20.0 |
| | Pigment 2 | | 20.0 | | | |
| Pigment dispersant | Polymeric dispersant | 10.0 | 10.0 | 10.0 | 10.0 | 10.0 |
| Organic solvent | Water-soluble organic solvent 1 | 70.0 | 70.0 | | | |
| | Water-soluble organic solvent 8 | | | 70.0 | | |
| | Water-soluble organic solvent 9 | | | | 70.0 | |
| | Water-soluble organic solvent 11 | | | | | 70.0 |
| Total (% by mass) | | 100.0 | 100.0 | 100.0 | 100.0 | 100.0 |

### <Synthesis of binder resin>

Binder resins 1 and 2 were produced as follows. In the following, the weight average molecular weights of the produced binder resins 1 and 2 are values obtained by standard polystyrene conversion according to the GPC method. A GPC System manufactured by SHIMADZU CORPORATION was used to perform the measurement. Further, the glass transition temperature (Tg) was calculated using the FOX equation.

### (Synthesis of binder resin 1)

The following was added dropwise over two hours to 317.8 g of diethylene glycol diethyl ether (manufactured by Tokyo Chemical Industry Co., Ltd. (TCI)) kept at 90°C in a flask with a capacity of 1 L: a mixture obtained by dissolving 340.0 g of methyl methacrylate as a radical polymerizable monomer, and 5.1 g of 2,2'-azobis(isobutyronitrile) (AIBN) (manufactured by Tokyo Chemical Industry Co., Ltd. (TCI)) as a polymerization initiator, in 85.0 g of diethylene glycol diethyl ether. Following completion of the dropwise addition, 1.1 g of AIBN was added thereto after 30 minutes, and also after one hour, while keeping the liquid temperature at 90°C. Further, the mixture was reacted at 90°C for one hour and diluted with diethylene glycol diethyl ether such that the concentration of active ingredients of the binder resin became 40.0% by mass to obtain a solution of the binder resin 1. In the solution of the obtained binder resin 1, the concentration of active ingredients was 40% by mass. The binder resin 1 had a Tg of 105°C and a weight average molecular weight of 20,000.

### (Synthesis of binder resin 2)

The following was added dropwise over two hours to 317.3 g of diethylene glycol diethyl ether (manufactured by Tokyo Chemical Industry Co., Ltd. (TCI)) kept at 90°C in a flask with a capacity of 1 L: a mixture obtained by dissolving 17.0 g of methacrylic acid, 153.0 g of methyl methacrylate, and 170.0 g of butyl methacrylate, as radical polymerizable monomers, and 5.1 g of 2,2'-azobis(isobutyronitrile) (AIBN) (manufactured by Tokyo Chemical Industry Co., Ltd. (TCI)) as a polymerization initiator in 85.0 g of diethylene glycol diethyl ether. Following completion of the dropwise addition, 1.1 g of AIBN was added thereto after 30 minutes, and also after one hour, while keeping the liquid temperature at 90°C. Further, the mixture was reacted at 90°C for one hour and diluted with diethylene glycol diethyl ether such that the concentration of active ingredients of the binder resin became 40.0% by mass to obtain a solution of binder resin 2. In the solution of the obtained binder resin 2, the concentration of active ingredients was 40.0% by mass. The binder resin 2 had a Tg of 60°C, and a weight average molecular weight of 19,000.

### <Production of ink>

Each material shown in Tables 2 to 5 was weighed at the ratio shown in Tables 2 to 5, they were mixed and stirred using a three-one motor, and then the mixture was filtered through a membrane filter with a pore size of 3 µm to obtain inks 1 to 28.

The details of raw materials shown in Tables 2 to 5 will be described later.

Further, Tables 2 to 5 show the amount of the water in the ink, the amount of the organic solvent S in the ink, the amount of the organic solvent A with a boiling point of 150°C or higher and lower than 200°C, in the ink, the amount of the water-soluble organic solvent B with a boiling point of 150°C or higher and lower than 200°C, in the ink, the amount of the water-soluble organic solvent Bx having an HSP value of 25.0 MPa^{1/2} or less, and a boiling point of 150°C or higher and lower than 200°C, in the ink, and the amount of the organic solvent Ax having an HSP value of 25.0 MPa^{1/2} or less, and a boiling point of 150°C or higher and lower than 200°C, in the ink. Each amount is expressed as a percentage (% by mass) relative to the total amount of the ink. Further, Tables 2 to 5 show the amount (% by mass) of the water-soluble organic solvent B in the organic solvent S, which is expressed as a percentage (% by mass) of the water-soluble organic solvent B relative to the total amount of the organic solvent S.

The amount of the water in the ink shown in Tables 2 to 5 is a value obtained through measurement by means of the Karl Fischer method. To perform the measurement, as a moisture meter, a Compact Karl Fischer Moisture Meter KF-31 manufactured by Nittoseiko Analytech Co., Ltd. was used.

In the tables, the viscosity a (mPa·s) is the viscosity at 23°C of the mixture Ma of the organic solvent S and water in which a mass ratio between the organic solvent S and the water (organic solvent S : water) is 99:1. The mixture Ma was obtained by measuring the amount of water contained in the organic solvent S by means of the Karl Fischer method, and adjusting such that the amount of water relative to the total of the organic solvent S and the water was 1% by mass.

In the tables, the viscosity b (mPa·s) is the viscosity at 23°C of the mixture Mb of the organic solvent S and water in which a mass ratio between the organic solvent S and the water (organic solvent S : water) is 100 - W : W, assuming that the amount of the water, relative to the total amount of the ink, is W% by mass. The mixture Mb was obtained by measuring the amount of water contained in the organic solvent S by means of the Karl Fischer method, and adjusting such that the amount of water relative to the total of the organic solvent S and the water was W% by mass, which was the same as the amount of the water relative to the total amount of the ink.

**[Table 2]**

| Table 2 Ink formulation (unit: % by mass) | | Ink 1 | Ink 2 | Ink 3 | Ink 4 | Ink 5 | Ink 6 | Ink7 | Ink 8 |
|---|---|---|---|---|---|---|---|---|---|
| Pigment dispersion | Pigment dispersion 1 | 25.0 | 25.0 | 25.0 | 25.0 | 25.0 | 25.0 | 25.0 | 25.0 |
| | Pigment dispersion 2 | | | | | | | | |
| | Pigment dispersion 3 | | | | | | | | |
| | Pigment dispersion 4 | | | | | | | | |
| | Pigment dispersion 5 | | | | | | | | |
| Water | | 6.0 | 6.0 | 6.0 | 6.0 | 9.0 | 3.0 | 6.0 | 6.0 |
| Binder resin | Solution of binder resin 1 | 20.0 | 50.0 | 20.0 | 20.0 | 12.5 | 20.0 | | |
| | Binder resin 3 | | | | | | | 5.0 | |
| | Solution of binder resin 2 | | | | | | | | 20.0 |
| | Binder resin 4 | | | | | | | | |
| | Binder resin 5 | | | | | | | | |
| Organic solvent | Water-soluble OS 1 | 48.7 | 18.7 | | | 53.2 | 51.7 | 63.7 | 48.7 |
| | Water-soluble OS 2 | | | 48.7 | | | | | |
| | Water-soluble OS 3 | | | | 48.7 | | | | |
| | Water-soluble OS 4 | | | | | | | | |
| | Water-soluble OS 5 | | | | | | | | |
| | Water-soluble OS 6 | | | | | | | | |
| | Water-soluble OS 7 | | | | | | | | |
| | Water-insoluble OS 1 | | | | | | | | |
| | Water-soluble OS 8 | | | | | | | | |
| | Water-soluble OS 9 | | | | | | | | |
| | Water-soluble OS 10 | | | | | | | | |
| | Water-soluble OS 11 | | | | | | | | |
| | Water-insoluble OS 2 | | | | | | | | |
| Surfactant | | 0.3 | 0.3 | 0.3 | 0.3 | 0.3 | 0.3 | 0.3 | 0.3 |
| Total (% by mass) | | 100.0 | 100.0 | 100.0 | 100.0 | 100.0 | 100.0 | 100.0 | 100.0 |
| Amount of water in ink (% by mass) | | 6.7 | 6.7 | 6.7 | 6.6 | 9.7 | 3.7 | 6.7 | 6.7 |
| Amount of organic solvent S in ink (% by mass) | | 77.5 | 65.5 | 77.5 | 77.6 | 77.5 | 80.5 | 80.5 | 77.5 |
| Amount of organic solvent A in ink (% by mass) | | 77.5 | 65.5 | 77.5 | 77.6 | 77.5 | 80.5 | 80.5 | 77.5 |
| Amount of water-soluble organic solvent B in ink (% by mass) | | 77.5 | 65.5 | 77.5 | 77.6 | 77.5 | 80.5 | 80.5 | 77.5 |
| Amount of water-soluble organic solvent Bx in ink (% by mass) | | 77.5 | 65.5 | 77.5 | 77.6 | 77.5 | 80.5 | 80.5 | 77.5 |
| Amount of water-soluble organic solvent B in organic solvent S (% by mass) | | 100.0 | 100.0 | 100.0 | 100.0 | 100.0 | 100.0 | 100.0 | 100.0 |
| Viscosity a (mPa·s) | | 1.20 | 1.20 | 2.35 | 2.73 | 1.20 | 1.20 | 1.20 | 1.20 |
| Viscosity b (mPa·s) | | 1.57 | 1.64 | 3.06 | 4.01 | 1.74 | 1.32 | 1.49 | 1.57 |
| a/b | | 0.77 | 0.74 | 0.77 | 0.68 | 0.69 | 0.91 | 0.81 | 0.77 |

**[Table 3]**

| Table 3 Ink formulation (unit: % by mass) | | Ink 9 | Ink 10 | Ink 11 | Ink 12 | Ink 13 | Ink 14 | Ink 15 |
|---|---|---|---|---|---|---|---|---|
| Pigment dispersion | Pigment dispersion 1 | | 25.0 | 25.0 | 25.0 | 25.0 | 25.0 | 25.0 |
| | Pigment dispersion 2 | 25.0 | | | | | | |
| | Pigment dispersion 3 | | | | | | | |
| | Pigment dispersion 4 | | | | | | | |
| | Pigment dispersion 5 | | | | | | | |
| Water | | 6.0 | 6.0 | 6.0 | 6.0 | 6.0 | 6.0 | 6.0 |
| Binder resin | Solution of binder resin 1 | 20.0 | 20.0 | 20.0 | | | | |
| | Binder resin 3 | | | | | | | |
| | Solution of binder resin 2 | | | | | | 20.0 | 20.0 |
| | Binder resin 4 | | | | 5.0 | | | |
| | Binder resin 5 | | | | | 3.0 | | |
| Organic solvent | Water-soluble OS 1 | 48.7 | 23.7 | 10.7 | 43.7 | 45.7 | 28.7 | |
| | Water-soluble OS 2 | | | | | | | 43.7 |
| | Water-soluble OS 3 | | | | | | | |
| | Water-soluble OS 4 | | | | | | 20.0 | |
| | Water-soluble OS 5 | | | | | | | 5.0 |
| | Water-soluble OS 6 | | | | | | | |
| | Water-soluble OS 7 | | | | | | | |
| | Water-insoluble OS 1 | | 25.0 | 38.0 | 20.0 | 20.0 | | |
| | Water-soluble OS 8 | | | | | | | |
| | Water-soluble OS 9 | | | | | | | |
| | Water-soluble OS 10 | | | | | | | |
| | Water-soluble OS 11 | | | | | | | |
| | Water-insoluble OS 2 | | | | | | | |
| Surfactant | | 0.3 | 0.3 | 0.3 | 0.3 | 0.3 | 0.3 | 0.3 |
| Total (% by mass) | | 100.0 | 100.0 | 100.0 | 100.0 | 100.0 | 100.0 | 100.0 |
| Amount of water in ink (% by mass) | | 6.7 | 6.7 | 6.7 | 6.7 | 6.7 | 6.7 | 6.7 |
| Amount of organic solvent S in ink (% by mass) | | 77.5 | 77.5 | 77.5 | 80.5 | 82.5 | 77.5 | 77.5 |
| Amount of organic solvent A in ink (% by mass) | | 77.5 | 77.5 | 77.5 | 80.5 | 82.5 | 77.5 | 72.5 |
| Amount of water-soluble organic solvent B in ink (% by mass) | | 77.5 | 52.5 | 39.5 | 60.5 | 62.5 | 77.5 | 72.5 |
| Amount of water-soluble organic solvent Bx in ink (% by mass) | | 77.5 | 52.5 | 39.5 | 60.5 | 62.5 | 57.7 | 72.5 |
| Amount of water-soluble organic solvent B in organic solvent S (% by mass) | | 100.0 | 67.7 | 51.0 | 75.2 | 75.8 | 100.0 | 93.5 |
| Viscosity a (mPa·s) | | 1.20 | 1.34 | 1.41 | 1.33 | 1.30 | 2.32 | 2.28 |
| Viscosity b (mPa·s) | | 1.57 | 1.68 | 1.66 | 1.63 | 1.63 | 3.01 | 2.89 |
| a/b | | 0.77 | 0.79 | 0.85 | 0.81 | 0.80 | 0.77 | 0.79 |

**[Table 4]**

| Table 4 Ink formulation (unit: % by mass) | | Ink 24 | Ink 25 | Ink 26 | Ink 27 |
|---|---|---|---|---|---|
| Pigment dispersion | Pigment dispersion 1 | | | | |
| | Pigment dispersion 2 | | | | |
| | Pigment dispersion 3 | 20.0 | 20.0 | 25.0 | |
| | Pigment dispersion 4 | | | | 25.0 |
| | Pigment dispersion 5 | | | | |
| Water | | 6.0 | 6.0 | 6.0 | 6.0 |
| Binder resin | Solution of binder resin 1 | | 12.5 | 20.0 | 20.0 |
| | Binder resin 3 | 5.0 | | | |
| | Solution of binder resin 2 | | | | |
| | Binder resin 4 | | | | |
| | Binder resin 5 | | | | |
| Organic solvent | Water-soluble OS 1 | | | | |
| | Water-soluble OS 2 | | | | |
| | Water-soluble OS 3 | | | | |
| | Water-soluble OS 4 | | | | |
| | Water-soluble OS 5 | | | | |
| | Water-soluble OS 6 | | | | |
| | Water-soluble OS 7 | | | | |
| | Water-insoluble OS 1 | 15.0 | 15.0 | 48.7 | 48.7 |
| | Water-soluble OS 8 | 53.7 | 46.2 | | |
| | Water-soluble OS 9 | | | | |
| | Water-soluble OS 10 | | | | |
| | Water-soluble OS 11 | | | | |
| | Water-insoluble OS 2 | | | | |
| Surfactant | | 0.3 | 0.3 | 0.3 | 0.3 |
| Total (% by mass) | | 100.0 | 100.0 | 100.0 | 100.0 |
| Amount of water in ink (% by mass) | | 6.7 | 6.7 | 6.7 | 6.7 |
| Amount of organic solvent S in ink (% by mass) | | 82.0 | 82.0 | 77.5 | 77.5 |
| Amount of organic solvent A in ink (% by mass) | | 82.0 | 82.0 | 77.5 | 77.5 |
| Amount of water-soluble organic solvent B in ink (% by mass) | | 67.0 | 67.0 | 28.8 | 28.8 |
| Amount of water-soluble organic solvent Bx in ink (% by mass) | | 67.0 | 67.0 | 28.8 | 28.8 |
| Amount of water-soluble organic solvent B in organic solvent S (% by mass) | | 81.7 | 81.7 | 37.2 | 37.2 |
| Viscosity a (mPa·s) | | 2.95 | 2.82 | 2.04 | 1.91 |
| Viscosity b (mPa·s) | | 4.15 | 3.76 | 2.66 | 2.31 |
| a/b | | 0.71 | 0.75 | 0.77 | 0.83 |

**[Table 5]**

| Table 5 Ink formulation (unit: % by mass) | | Ink 16 | Ink 17 | Ink 18 | Ink 19 | Ink 20 |
|---|---|---|---|---|---|---|
| Pigment dispersion | Pigment dispersion 1 | 25.0 | 25.0 | 25.0 | 25.0 | 25.0 |
| | Pigment dispersion 2 | | | | | |
| | Pigment dispersion 3 | | | | | |
| | Pigment dispersion 4 | | | | | |
| | Pigment dispersion 5 | | | | | |
| Water | | | 1.5 | 15.0 | 6.0 | 6.0 |
| Binder resin | Solution of binder resin 1 | 20.0 | 20.0 | 10.0 | 20.0 | 20.0 |
| | Binder resin 3 | | | | | |
| | Solution of binder resin 2 | | | | | |
| | Binder resin 4 | | | | | |
| | Binder resin 5 | | | | | |
| Organic solvent | Water-soluble OS 1 | 54.7 | 53.2 | 49.7 | 28.7 | 28.7 |
| | Water-soluble OS 2 | | | | | |
| | Water-soluble OS 3 | | | | | |
| | Water-soluble OS 4 | | | | | |
| | Water-soluble OS 5 | | | | 20.0 | |
| | Water-soluble OS 6 | | | | | 20.0 |
| | Water-soluble OS 7 | | | | | |
| | Water-insoluble OS 1 | | | | | |
| | Water-soluble OS 8 | | | | | |
| | Water-soluble OS 9 | | | | | |
| | Water-soluble OS 10 | | | | | |
| | Water-soluble OS 11 | | | | | |
| | Water-insoluble OS 2 | | | | | |
| Surfactant | | 0.3 | 0.3 | 0.3 | 0.3 | 0.3 |
| Total (% by mass) | | 100.0 | 100.0 | 100.0 | 100.0 | 100.0 |
| Amount of water in ink (% by mass) | | 0.7 | 2.2 | 15.6 | 6.6 | 6.6 |
| Amount of organic solvent S in ink (% by mass) | | 83.5 | 82.0 | 72.6 | 77.6 | 77.6 |
| Amount of organic solvent A in ink (% by mass) | | 83.5 | 82.0 | 72.6 | 57.6 | 57.6 |
| Amount of water-soluble organic solvent B in ink (% by mass) | | 83.5 | 82.0 | 72.6 | 57.6 | 57.6 |
| Amount of water-soluble organic solvent Bx in ink (% by mass) | | 83.5 | 82.0 | 72.6 | 57.6 | 57.6 |
| Amount of water-soluble organic solvent B in organic solvent S (% by mass) | | 100.0 | 100.0 | 100.0 | 74.2 | 74.2 |
| Viscosity a (mPa·s) | | 120 | 1.20 | 1.20 | 1.43 | 1.92 |
| Viscosity b (mPa·s) | | 1.20 | 1.25 | 2.17 | 1.74 | 2.44 |
| a/b | | 1.00 | 0.96 | 0.56 | 0.83 | 0.79 |

**[Table 5 (continued)]**

| Table 5 (continued) Ink formulation (unit: % by mass) | | Ink 21 | Ink 22 | Ink 28 | Ink 23 |
|---|---|---|---|---|---|
| Pigment dispersion | Pigment dispersion 1 | 25.0 | 25.0 | | |
| | Pigment dispersion 2 | | | | |
| | Pigment dispersion 3 | | | | |
| | Pigment dispersion 4 | | | | |
| | Pigment dispersion 5 | | | 20.0 | |
| Water | | 6.0 | 6.0 | 6.0 | 8.0 |
| Binder resin | Solution of binder resin 1 | 20.0 | 20.0 | | 20.0 |
| | Binder resin 3 | | | 5.0 | |
| | Solution of binder resin 2 | | | | |
| | Binder resin 4 | | | | |
| | Binder resin 5 | | | | |
| Organic solvent | Water-soluble OS 1 | 30.0 | 7.7 | | 48.7 |
| | Water-soluble OS 2 | | | | |
| | Water-soluble OS 3 | | | | 23.0 |
| | Water-soluble OS 4 | | | | |
| | Water-soluble OS 5 | | | 7.5 | |
| | Water-soluble OS 6 | | | | |
| | Water-soluble OS 7 | 18.7 | 3.0 | | |
| | Water-insoluble OS 1 | | 38.0 | | |
| | Water-soluble OS 8 | | | | |
| | Water-soluble OS 9 | | | | |
| | Water-soluble OS 10 | | | 16.5 | |
| | Water-soluble OS 11 | | | 2.5 | |
| | Water-insoluble OS 2 | | | 42.2 | |
| Surfactant | | 0.3 | 0.3 | 0.3 | 0.3 |
| Total (% by mass) | | 100.0 | 100.0 | 100.0 | 100.0 |
| Amount of water in ink (% by mass) | | 6.6 | 6.3 | 6.6 | 8.7 |
| Amount of organic solvent S in ink (% by mass) | | 77.6 | 77.9 | 82.1 | 83.0 |
| Amount of organic solvent A in ink (% by mass) | | 58.9 | 74.9 | 74.6 | 83.0 |
| Amount of water-soluble organic solvent B in ink (% by mass) | | 58.9 | 36.9 | 32.4 | 83.0 |
| Amount of water-soluble organic solvent Bx in ink (% by mass) | | 58.9 | 36.9 | 16.2 | 83.0 |
| Amount of water-soluble organic solvent B in organic solvent S (% by mass) | | 75.9 | 47.4 | 39.5 | 100.0 |
| Viscosity a (mPa·s) | | 120 | 1.43 | 4.11 | 1.20 |
| Viscosity b (mPa·s) | | 1.54 | WS | 4.16 | 1.62 |
| a/b | | 0.78 | - | 0.99 | 0.74 |

The details of materials shown in Tables 1 to 5 are described below. In Tables 1 to 5, "water-soluble OS 1" to "water-soluble OS 11" respectively indicate "water-soluble organic solvent 1" to "water-soluble organic solvent 11", and "water-insoluble OS 1" to "water-insoluble OS 2" respectively indicate "water-insoluble organic solvent 1" to "water-insoluble organic solvent 2".

### (Pigment)

Pigment 1: Carbon black, "MOGUL L" (product name), manufactured by Cabot Corporation
Pigment 2: Copper phthalocyanine, "Fastogen Blue LA 5380" (product name), manufactured by DIC Corporation

### (Pigment dispersant)

Polymeric dispersant: "Solsperse J180" (product name), manufactured by The Lubrizol Corporation, active ingredient: 100% by mass

### (Pigment dispersion)

Pigment dispersions 1 to 5: Produced as above, pigment: 20% by mass, solvent: 70% by mass

### (Binder resin)

Solution of binder resin 1: Produced as above, active ingredient ((meth)acrylic resin): 40% by mass, solvent (diethylene glycol diethyl ether): 60% by mass, resin Tg: 105°C, resin weight average molecular weight: 20,000
Solution of binder resin 2: Produced as above, active ingredient ((meth)acrylic resin): 40% by mass, solvent (diethylene glycol diethyl ether): 60% by mass, resin Tg: 60°C, resin weight average molecular weight: 19,000
Binder resin 3: "Hiros-X RS-1190" (product name), manufactured by SEIKO PMC CORPORATION, active ingredient ((meth)acrylic resin): 100 % by mass, Tg: 73°C
Binder resin 4: "Hiros-X X-1" (product name), manufactured by SEIKO PMC CORPORATION, active ingredient (styrene-(meth)acrylic resin): 100% by mass, Tg: 52°C
Binder resin 5: "XIRAN 1000P" (product name), manufactured by Polyscope Polymers B. V., active ingredient (styrene-maleic acid resin): 100% by mass, Tg: 150°C

### (Organic solvent)

Water-soluble organic solvent 1: Diethylene glycol diethyl ether, manufactured by Tokyo Chemical Industry Co., Ltd. (TCI), boiling point: 188°C, HSP value: 17.5 MPa^{1/2}
Water-soluble organic solvent 2: Diethylene glycol monomethyl ether, manufactured by Tokyo Chemical Industry Co., Ltd. (TCI), boiling point: 193°C, HSP value: 22.7 MPa^{1/2}
Water-soluble organic solvent 3: 3-methoxy-3-methyl-1-butanol, manufactured by Tokyo Chemical Industry Co., Ltd. (TCI), boiling point: 174°C, HSP value: 19.5 MPa^{1/2}
Water-soluble organic solvent 4: 1,2-propanediol, manufactured by Tokyo Chemical Industry Co., Ltd. (TCI), boiling point: 188°C, HSP value: 29.8 MPa^{1/2}
Water-soluble organic solvent 5: γ-butyrolactone, manufactured by Tokyo Chemical Industry Co., Ltd. (TCI), boiling point: 204°C, HSP value: 25.6 MPa^{1/2}
Water-soluble organic solvent 6: 2-pyrrolidone, manufactured by Tokyo Chemical Industry Co., Ltd. (TCI), boiling point: 245°C, HSP value: 23.6 MPa^{1/2}
Water-soluble organic solvent 7: Ethylene glycol monomethyl ether acetate, manufactured by Tokyo Chemical Industry Co., Ltd. (TCI), boiling point: 143°C, HSP value: 20.4 MPa^{1/2}
Water-soluble organic solvent 8: 3-methoxy-1-butanol, manufactured by Tokyo Chemical Industry Co., Ltd. (TCI), boiling point: 161°C, HSP value: 21.2 MPa^{1/2}
Water-soluble organic solvent 9: Ethyl lactate, manufactured by Tokyo Chemical Industry Co., Ltd. (TCI), boiling point: 154°C, HSP value: 21.7 MPa^{1/2}
Water-soluble organic solvent 10: Ethylene glycol, manufactured by Tokyo Chemical Industry Co., Ltd. (TCI), boiling point: 197°C, HSP value: 33.0 MPa^{1/2}
Water-soluble organic solvent 11: Ethylene glycol monoacetate, manufactured by Tokyo Chemical Industry Co., Ltd. (TCI), boiling point: 182°C, HSP value: 24.6 MPa^{1/2}
Water-insoluble organic solvent 1: Ethylene glycol monobutyl ether acetate, manufactured by Tokyo Chemical Industry Co., Ltd. (TCI), boiling point: 192°C, HSP value: 18.4 MPa^{1/2}
Water-insoluble organic solvent 2: Ethylene glycol diacetate, manufactured by Tokyo Chemical Industry Co., Ltd. (TCI), boiling point: 190°C, HSP value: 19.5 MPa^{1/2}

### (Surfactant)

Surfactant: Silicone-based surfactant, "BYK-3550" (product name), manufactured by BYK-Chemie Japan K.K.

### <Evaluation>

The following evaluation was performed using the inks produced above. Tables 6 to 9 show inks used in Examples 1 to 19 and Comparative Examples 1 to 8, and evaluation results. In Tables 6 to 9, Ex 1 to Ex 19 respectively indicate Example 1 to Example 19, and C Ex 1 to C Ex 8 respectively indicate Comparative Example 1 to Comparative Example 8. In Table 5, "WS" indicate "water separation".

### (Jetting properties)

With respect to Examples 1 to 19 and Comparative Examples 1 to 8, inks shown in Tables 6 to 9, among inks 1 to 28 produced, were introduced into an ink path of a commercially available solvent inkjet printer ("ValueJet VJ-628" (product name) manufactured by MUTOH INDUSTRIES LTD.), and, into a color path that is not the path into which the above inks were introduced, a colorless ink 23 was introduced. When black inks (inks 1 to 8, 10 to 22, and 24 to 28) were used, a solid black image with a size of 25 cm in length x 18 cm in width was printed on A4 size polypropylene synthetic paper ("New Yupo FGS110" (product name) manufactured by YUPO CORPORATION). When a cyan ink (ink 9) was used, a solid blue image with a size of 25 cm in length x 18 cm in width was printed on the A4 size polypropylene synthetic paper ("New Yupo FGS110" (product name). Assuming that the start of printing was at an upper portion and the end of printing was at a lower portion, if the jetting properties are poor, jetting failure occurs during printing, and the image density at the lower portion decreases compared with that of the upper portion. Therefore, the difference in density between the upper potion and the lower portion was set as the difference in OD values, and the jetting properties were evaluated by the difference in OD values. Portions to be measured were a range of 3 cm at the upper portion and a range of 3 cm at the lower portion of the solid image. Measurement was performed five times for each of the portions to be measured, the average OD value at the upper portion and the average OD value at the lower portion were calculated, and the difference in OD values was determined from the following formula. Difference in OD values = (average OD value at upper portion - average OD value at lower portion)

The evaluation criteria were as follows.
A: Difference in OD values was less than 0.05
B: Difference in OD values was 0.05 or more and less than 0.10
C: Difference in OD values was 0.10 or more and less than 0.20
D: Difference in OD values was 0.20 or more

### (Image bleeding)

Image bleeding was evaluated as follows for the produced inks 1 to 22 and 24 to 28.

Using a commercially available inkjet printer ("ValueJet VJ-628" (product name)), an image in which monochromatic characters of 6 to 12 points were arranged was printed on A4 size polypropylene synthetic paper ("New Yupo FGS110" (product name) manufactured by YUPO CORPORATION). Bleeding of the character image of the obtained printed matter was visually observed and evaluated according to the following evaluation criteria.
A: Characters of any size are clearly visible without bleeding
B: Characters are slightly thickened, but characters of any size are clearly visible without breaking down
C: Characters are thickened, and characters of 8 points or less break down
D: Characters are noticeably thickened, and even if size is 12 point, bleeding is noticeable

### (Adhesion of image to substrate)

A tape was pasted to a solid image portion of the printed matter having the solid image produced for evaluation of the inkjet jetting properties. The image, and the tape after the tape was peeled off, were observed, and the adhesion of the image to the substrate was evaluated according to the following evaluation criteria.
A: No peeling was observed on the image
B: There was a slight color transition onto the tape after peeling off, but no noticeable peeling was observed on the image
C: A portion of the image peeled off
D: A portion where the tape was pasted of the image was almost peeled off

**[Table 6]**

| Table 6 | Ex 1 | Ex 2 | Ex 3 | Ex 4 | Ex 5 | Ex 6 | Ex 7 | Ex 8 |
|---|---|---|---|---|---|---|---|---|
| Ink | Ink 1 | Ink 2 | Ink 3 | Ink 4 | Ink 5 | Ink 6 | Ink7 | Ink 8 |
| Jetting properties | A | A | A | A | B | A | A | A |
| Image bleeding | A | A | A | A | A | B | A | A |
| Adhesion | A | A | A | A | A | A | B | B |

**[Table 7]**

| Table 7 | Ex 9 | Ex 10 | Ex 11 | Ex 12 | Ex 13 | Ex 14 | Ex 15 |
|---|---|---|---|---|---|---|---|
| Ink | Ink 9 | Ink 10 | Ink 11 | Ink 12 | Ink 13 | Ink 14 | Ink 15 |
| Jetting properties | A | B | B | A | A | B | A |
| Image bleeding | A | A | A | A | A | A | B |
| Adhesion | A | A | A | B | B | B | B |

**[Table 8]**

| Table 8 | Ex 16 | Ex 17 | Ex 18 | Ex 19 |
|---|---|---|---|---|
| Ink | Ink 24 | Ink 25 | Ink 26 | Ink 27 |
| Jetting properties | A | A | A | A |
| Image bleeding | A | A | A | A |
| Adhesion | B | A | A | A |

**[Table 9]**

| Table 9 | C Ex 1 | CEx2 | CEx3 | CEx4 | CEx5 | CEx6 | CEx7 | CEx8 |
|---|---|---|---|---|---|---|---|---|
| Ink | Ink 16 | Ink 17 | Ink 18 | Ink 19 | Ink 20 | Ink 21 | Ink 22 | Ink 28 |
| Jetting properties | A | A | D | A | A | D | D | D |
| Image bleeding | D | D | B | D | D | A | A | A |
| Adhesion | B | B | C | D | D | A | A | B |

Examples 1 to 19 showed excellent results in both the evaluation of the jetting properties, and the evaluation of image bleeding.

Comparative Examples 1 and 2 used inks 16 and 17, each containing a small amount of water, respectively. Comparative Examples 1 and 2 did not show favorable results in the evaluation of image bleeding. Since the amount of water in the inks was small, it is considered that the drying properties were low, and image bleeding occurred. Further, Comparative Example 3, which used ink 18 containing a large amount of water, did not show favorable results in the evaluation of the jetting properties. It is considered that the ink viscosity increased and the jetting properties were deteriorated. Comparative Examples 4 and 5 used inks 19 and 20, respectively, each containing an organic solvent with a high boiling point, in an amount of more than 10% by mass, relative to the total amount of the organic solvent in the ink. Comparative Examples 4 and 5 did not show favorable results in the evaluation of image bleeding. It is considered that the drying properties of the ink were deteriorated, and image bleeding worsened. Comparative Example 6 used ink 21 containing an organic solvent with a low boiling point, in an amount of more than 10% by mass, relative to the total amount of the organic solvent in the ink. Comparative Example 6 did not show favorable results in the evaluation of the jetting properties. It is considered that the ink drying speed on a nozzle face of an inkjet head increased, and the jetting properties deteriorated due to nozzle clogging or the like. Comparative Examples 7 and 8 used inks 22 and 28, respectively, in each of which the amount of the water-soluble organic solvent B relative to the total amount of the organic solvent S was small, and the ratio a/b of 0.95 or less was not satisfied. Comparative Examples 7 and 8 did not show favorable results in the evaluation of the jetting properties. In Comparative Examples 7 and 8, it is considered that neither an effect of suppressing an increase in the ink viscosity by uniformly blending water into the ink, nor an effect of suppressing an increase in the ink viscosity caused by volatilization of components in the vicinity of the nozzle was sufficiently obtained, and the jetting properties deteriorated.

### <Production of pretreatment liquid>

Each material shown in Table 10 was weighed at the ratio shown in Table 10, and they were mixed to obtain pretreatment liquids 1 to 7.

Table 10 shows the amount (% by mass) of water in a pretreatment liquid, which is expressed as a percentage (% by mass) of water, relative to the total amount of a pretreatment liquid. The amount of water in a pretreatment liquid shown in Table 10 is a value obtained through measurement by means of the Karl Fischer method. To perform the measurement, as a moisture meter, a Compact Karl Fischer Moisture Meter KF-31 manufactured by Nittoseiko Analytech Co., Ltd. was used.

The details of materials shown in Table 10 are described below.
Aggregating agent 1: Calcium chloride, manufactured by FUJIFILM Wako Pure Chemical Corporation
Aggregating agent 2: Calcium nitrate tetrahydrate, manufactured by FUJIFILM Wako Pure Chemical Corporation
Aggregating agent 3: Cationic water-soluble resin, "HIMAX SC-100" (product name), manufactured by HYMO CORPORATION, active ingredient (cationic water-soluble resin): 35% by mass
Aggregating agent 4: Resin emulsion (cationic water-dispersible acrylic resin), "POLYSOL AP-1350" (product name), manufactured by Resonac Corporation, active ingredient (cationic water-dispersible acrylic resin): 32% by mass
Binder resin: Polyvinyl alcohol resin, "JMR-10M" (product name), manufactured by JAPAN VAM & POVAL CO., LTD., active ingredient amount: 100% by mass
Surfactant: Silicone-based surfactant, "BYK-3550" (product name), manufactured by BYK-Chemie Japan K.K.

**[Table 10]**

| Table 10 Formulation of pretreatment liquid | Pretreatment liquid 1 | Pretreatment liquid 2 | Pretreatment liquid 3 | Pretreatment liquid 4 | Pretreatment liquid 5 | Pretreatment liquid 6 | Pretreatment liquid 7 |
|---|---|---|---|---|---|---|---|
| Aggregating agent 1 | 1.0 | | | | 5.0 | 0.1 | 1.0 |
| Aggregating agent 2 | | 1.5 | | | | | |
| Aggregating agent3 | | | 2.9 | | | | |
| Aggregating agent 4 | 15.6 | 15.6 | 15.6 | 31.3 | 15.6 | 15.6 | |
| Binder resin | | | | | | | 10.0 |
| Water | 82.9 | 82.4 | 81.0 | 68.2 | 78.9 | 83.8 | 28.5 |
| Water-soluble organic solvent | | | | | | | 60.0 |
| Surfactant | 0.5 | 0.5 | 0.5 | 0.5 | 0.5 | 0.5 | 0.5 |
| Total (% by mass) | 100.0 | 100.0 | 100.0 | 100.0 | 100.0 | 100.0 | 100.0 |
| Amount of water in pretreatment liquid (% by mass) | 94.0 | 94.1 | 93.8 | 90.1 | 90.3 | 95.0 | 29.2 |

### <Evaluation>

Printed matters were produced as described below using pretreatment liquids 1 to 7 and inks 1, 4 to 6, and 10 produced as above, and tone reproduction characteristics were evaluated. Tables 11 and 12 show pretreatment liquids and inks used in Examples 20 to 30 and evaluation results.

### (Production of printed matter)

For Examples 20 to 30, pretreatment liquids 1 to 7 produced as above were applied to an A4 size PET film using a bar coater such that the applied amount was 20 g/m². Thereafter, they were left at room temperature for one hour to obtain a pretreated printing substrate.

A commercially available inkjet printer ("ValueJet VJ-628" (product name)) was used to print, on the pretreated printing substrates obtained as above, gradation images constituted by solid images at 10% increments from 0% to 100% coverage rate using the inks shown in Tables 11 and 12. Reproduction characteristics of the gradation images on the resulting printed matters were visually observed and evaluated according to the following evaluation criteria.
A: Gradual density difference exists in all tones, and tones are reproduced
B: Although it is difficult to observe density difference in a portion where a coverage rate is high, tones are substantially reproduced
C: When a coverage rate is 50% or more, dots break down, and tones are not reproduced

**[Table 11]**

| Table 11 | Ex 20 | Ex 21 | Ex 22 | Ex 23 | Ex 24 | Ex 25 |
|---|---|---|---|---|---|---|
| Ink | Ink 1 | Ink 4 | Ink 10 | Ink 5 | Ink 6 | Ink 1 |
| Pretreatment liquid | Pretreatment liquid 1 | Pretreatment liquid 1 | Pretreatment liquid 1 | Pretreatment liquid 1 | Pretreatment liquid 1 | Pretreatment liquid 4 |
| Tone reproduction characteristic | A | A | A | A | B | B |

**[Table 12]**

| Table 12 | Ex 26 | Ex 27 | Ex 28 | Ex 29 | Ex 30 |
|---|---|---|---|---|---|
| Ink | Ink 1 | Ink 1 | Ink 1 | Ink 1 | Ink 1 |
| Pretreatment liquid | Pretreatment liquid 5 | Pretreatment liquid 6 | Pretreatment liquid 7 | Pretreatment liquid 2 | Pretreatment liquid 3 |
| Tone reproduction characteristic | A | B | B | A | A |

As shown in the tables, Examples 20 to 30 showed excellent results in the evaluation of tone reproduction characteristics of images.

It is to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. An inkjet ink comprising:
a colorant;
a binder resin;
water; and
an organic solvent S, wherein
the amount of the water is in a range from 3.0% by mass to 10.0% by mass, relative to the total amount of the ink,
the organic solvent S includes an organic solvent A with a boiling point of 150°C or higher and lower than 200°C, in an amount of 90.0% by mass or more, relative to the total amount of the organic solvent S, and
at least one selected from the group consisting of (i) and (ii) below is satisfied:
(i) the organic solvent A includes a water-soluble organic solvent B with a boiling point of 150°C or higher and lower than 200°C, in an amount of 50.0% by mass or more, relative to the total amount of the organic solvent S; and
(ii) assuming that the amount of the water, relative to the total amount of the ink, is W% by mass, that a viscosity a (mPa·s) is a viscosity at 23°C of a mixture Ma of the organic solvent S and water in which a mass ratio between the organic solvent S and the water (organic solvent S : water) is 99: 1, and that a viscosity b (mPa·s) is a viscosity at 23°C of a mixture Mb of the organic solvent S and water in which a mass ratio between the organic solvent S and the water (organic solvent S : water) is 100 - W : W; then a ratio a/b between the viscosity a and the viscosity b is 0.95 or less.

2. The inkjet ink according to claim 1, wherein
(i) is satisfied.

3. The inkjet ink according to claim 2, wherein
the water-soluble organic solvent B includes a water-soluble organic solvent Bx having a Hansen solubility parameter (an HSP value) of 25.0 MPa^{1/2} or less, and a boiling point of 150°C or higher and lower than 200°C.

4. The inkjet ink according to claim 3, wherein
the amount of the water-soluble organic solvent Bx is 75.0% by mass or more, relative to the total amount of the water-soluble organic solvent B.

5. The inkjet ink according to claim 1, wherein
(ii) is satisfied.

6. The inkjet ink according to claim 5, wherein
the organic solvent A includes an organic solvent Ax having a Hansen solubility parameter (an HSP value) of 25.0 MPa^{1/2} or less, and a boiling point of 150°C or higher and lower than 200°C.

7. The inkjet ink according to any one of claims 1 to 6, wherein
the binder resin includes a (meth)acrylic resin.

8. An inkjet ink set comprising
the inkjet ink according to any one of claims 1 to 7; and
a pretreatment liquid including
an aggregating agent, and
water in an amount of more than 10.0% by mass, relative to the total amount of the pretreatment liquid.

9. The inkjet ink set according to claim 8, wherein
the aggregating agent includes at least one selected from the group consisting of a polyvalent metal salt and a cationic water-soluble resin.
